# EUROPEAN PATENT SPECIFICATION

(11) **EP 0 840 225 B1**
(45) Date of publication and mention of the grant of the patent: **02.01.2003**
(21) Application number: 97118646.5
(22) Date of filing: 27.10.1997
(51) Int. Cl.: G06F 11/16, G05B 9/03

(54) **Redundant information processing system**
Redundantes Datenverarbeitungssystem
Système redondant de traitement de données

(30) Priority: 29.10.1996 JP 28639096; 28.01.1997 JP 1365397; 30.01.1997 JP 1622897; 19.03.1997 JP 6606497
(43) Date of publication of application: 06.05.1998
(60) Divisional application: 02014725.2
(73) Proprietor: Hitachi, Ltd., Chiyoda-ku, Tokyo 101 (JP)
(72) Inventor: Kanekawa, Nobuyasu, Hitachi-shi (JP); Yamaguchi, Shinichiro, Mito-shi (JP); Miyazaki, Naoto, Hitachi-shi (JP); Kasuya, Naohiro, Hitachinaka-shi (JP); Kajigaya, Kazuhiko, Iruma-shi (JP); Miyazaki, Yoshihiro, Hitachi-shi (JP)
(74) Representative: Strehl Schübel-Hopf & Partner

(56) References cited:
- EP-A- 0 307 191
- EP-A- 0 372 579
- LOHMANN H -J: "FAIL-SAFE DATA PROCESSING IN RAILWAY SIGNALING SYSTEMS" SIEMENS FORSCHUNGS- UND ENTWICKLUNGSBERICHTE, vol. 7, no. 6, 1978, pages 374-377, XP000654287

## Description

### BACKGROUND OF THE INVENTION

The present invention relates to an information processing system of high reliability and safety, and more particularly to an output circuit, an external circuit, and a man-machine interface circuit of the information processing system.

### Description of the Related Art

Transport facilities such as air planes and automobiles are required to be controlled sophisticatedly in order to improve (fuel) efficiency and safety and to speed up. Controllers used for these transport facilities are changing to the form of electronics. In order to improve the efficiency and safety, an information processing system is strongly desired to ensure reliability and fail safe (not delivering a danger side output upon failure occurrence).

First, in order to improve the reliability of an information processing system, a method of incorporating redundant constituent elements (modules) into the system has been widely used. With this method, it is essential to use a final output circuit for selecting a normal output from outputs of redundant modules. A majority decision circuit, a selector circuit and the like have been used as the final output circuit.

In the case of a logical OR circuit used as the final output circuit, if a danger side output is set to a value representative of truth (generally H in binary logic) and a safety side output is set to a value representative of false (generally L in binary logic), a system delivers a danger side output only when all redundant modules deliver the danger side outputs. Therefore, unless all the redundant modules erroneously deliver the danger side output, the system will not deliver an erroneous danger side output and fail safe can be ensured. In particular, if the danger side output is represented by an alternating signal and the safety side output is represented by another signal, fail safe can be improved considerably.

Whether or not the system can select a normal output depends on the operation of a final output circuit. Therefore, the reliability of this final output circuit changes the reliability of the whole system. In order to improve the reliability of the system, it is therefore important to ensure the reliability of the final output circuit.

In order to ensure the reliability of the final output circuit on which the reliability and safety of the system depend, a normal operation of the final output circuit has been checked by inputting a test pattern to the circuit, or the final output circuit has been configured to be fail safe.

A fail safe logical AND circuit is configured by a plurality of D-flip-flops with an alternating signal being input to each clock terminal. This logical AND circuit has a considerably small number of danger side failures so that it has been used widely.

Of the above-described conventional techniques, the method of inputting a test pattern to a final output circuit can be performed easily to check the normal operation of the circuit, if the system has redundant modules operating synchronously. This method is required, however, to take further considerations, if the system has redundant modules operating synchronously.

In a system with redundant modules operating synchronously, the redundant modules are required to synchronously perform the same operation in order to retain synchronization. Therefore, the redundant modules always deliver the same output to the final output circuit. The inherent function to the final output circuit is to select a normal output through majority decision or the like, even if there is incoincidence between outputs of the redundant modules. Accordingly, if the redundant modules always deliver the same output, the inherent function to the final output circuit cannot be tested sufficiently.

Even if the instruction execution portion only for output is operated differently at each module and the other instruction execution portion is operated in the same manner at all modules, the number of steps of a branch instruction used for this purpose becomes different. As a result, synchronization between modules is disturbed. If a method of comparing bus signals of redundant modules is used, the instruction execution portion for output is different at each module so that incoincidence occurs and a normal operation is impossible.

Second, it is an essential factor for high reliability of a system to improve the reliability of an interface circuit for inputting information from an external equipment. As such an interface circuit, a switch or a relay is often used. A contact resistance of such a switch or relay depends on current flowing therethrough. If current is small, the contact resistance is large. Therefore, if current flowing through a terminating resistor is small, the contact resistance of an input switch increases which may cause defective contact. In the application field requiring high reliability, it is necessary to set current flowing through a switch to a predetermined value or large in order not to make defective contact. From this reason, current flowing through the switch is directed to a terminating resistor.

The above-described conventional techniques are very excellent in preventing a system from performing a danger side operation to be caused by a stuck-at-0 or stuck-at-1 failure which occupies most of failures of an interface circuit. However, since a pulse generator or the like is required, the system becomes complicated and expensive. In addition, the failure rate of the whole system rises and the usability of the system lowers.

Third, it is also an essential factor for high reliability of a system to improve the reliability of an interface circuit for manually inputting information to the system. As means for manually inputting information, a momentary switch is widely used. The momentary switch is a switch which changes its open/close status only when it is operated upon, i.e., a switch without a mechanical lock mechanism and a so-called push-button switch.

Depending upon an application field of a system, a malfunction or erroneous manipulation of the system may result in a severe danger. In such an application field, it is necessary to provide a proper countermeasure for making the system not perform a dangerous operation upon occurrence of an erroneous manipulation of a momentary switch or a malfunction of a momentary switch interface circuit.

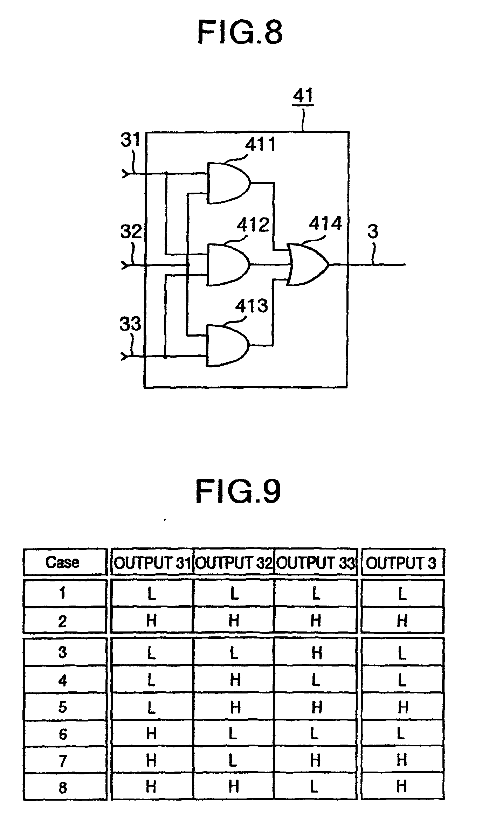

In order to prevent erroneous manipulation of an input switch or the like, a pulse signal has been used to indicate safety state, as described in "Fault Tolerant Computing", edited by Masao KOHDEN, MARUZEN Advanced Technology <Electronics, Information, Communications Edition> MARUZEN, (1989), p. 217, Figs. 8 - 13. If a stuck-at-0 or stuck-at-1 failure occurs at the interface circuit, a pulse train is not obtained and so it is judged that the system is in a danger state, and a safety side operation is performed to avoid any danger.

Power consumption and heat generation of a terminating resistor of a conventional input circuit are required to be taken into further consideration. Reduction of power consumption and heat generation of a terminating resistor also reduce a physical size of the terminating resistor and making the circuit compact. According to conventional techniques, however, current of a certain value or larger is flowed through a terminating resistor in order not to generate defective contact. There is therefore a limit in reducing power consumption and heat generation of the terminating resistor.

Apart from the above, developments of microelectronics technology have allowed to integrally form a large scale logic circuit such as a processor and a large capacity memory such as a ferroelectric memory, both on a single silicon chip. Such semiconductor elements are called a logic mix-mount LSI and described, for example, in JP-A-7-295547. In this document, high performance and compactness are realized by incorporating logic mix-mounting technology. Since a logic mix-mount LSI is fabricated by using a very fine rule, wiring patterns and cells in LSI may be degraded with time or the contents of a flip-flop may be inverted by external disturbance such as external noises and α rays. Different from an SRAM, a DRAM formed on a chip has a very large change in current flowing therethrough during the operation, and generates a large peak current. This peak current and di/dt generate large power source noises. This peak current is generated when a bit line is amplified so that noises are also generated in the silicon substrate through capacitance coupling of the bit line and silicon substrate. A refresh operation itself essential to DRAM is a bit line amplifying operation, and therefore noises same as in an access cycle are generated. As above, if DRAM is mixedly mounted, noises are likely to be generated, although a large memory capacity can be realized. Therefore, errors of calculated data may occur and the reliability of data is lowered. This becomes a critical problem when a logic mix-mount LSI is used with a system requiring high reliability such as industrial equipments.

A general approach to solving the above problem is to configure a multi-system by using a plurality of logic mix-mount LSIs.

Another improved approach is to detect errors of calculated data through comparison of outputs from integrated two processors, as disclosed in JP-A-2-244252, JP-A-7-171581, JP-A-7-234801, and JP-A-8-16421.

With the approach of configuring a plurality of logic mix-mount LSIs, however, the cost of a system increases and the system becomes bulky, considerably lowering the merits of logic mix-mount LSI.

With the approach of detecting errors of calculated data through comparison of outputs from two integrated processors, however, concurrent errors to be caused by common noises entered from a power source or the like and other LSI manufacture problems are still not taken into consideration.

EP-A-0 307 191 discloses a multiplex control system showing all features of the pre-characterising parts of present claims 1 and 2.

### SUMMARY OF THE INVENTION

The object of the present invention is to improve the reliability and flexibility of the redundant information processing system.

The object is met by the data output circuit of present claim 1 and the information processing system of claim 2. A preferred modification is given in claim 3.

The present invention provides an information processing system of high reliability.

A first embodiment of the present invention provides means for inspecting a final output circuit of a system with redundant modules operating synchronously.

A data output circuit has a register for outputting write data in common for all modules and a register for outputting write data specific to only a corresponding module and neglecting other modules.

Accordingly, if data is written in the register for outputting write data in common for all modules, in a normal operation, then the same output is delivered from all redundant modules. If any one of the modules has a failure and a normal output cannot be delivered, the final output circuit selects the normal output to continue the normal operation. In testing the final output circuit, data is written in the register for outputting write data specific to only a corresponding module and neglecting other modules. It is therefore possible that only the corresponding module among the redundant modules can deliver an output different from other modules, and a test pattern of operation check can be input to the final output circuit.

With a conventional technique in which a logical OR circuit is used as the final output circuit for receiving outputs from redundant modules, if a failure of the logical OR circuit does not occur and all redundant modules do not deliver a danger side output, then the system will not deliver a danger side output. Therefore, this technique is very excellent in realizing a fail safe system. With this conventional technique, however, it is necessary to further consider normality of intermediate processes not limiting only to the final process of delivering an output.

Therefore, a second embodiment of the present invention provides a fail safe system capable of ensuring normality of intermediate processes.

A comparator performs a comparison check between internal signals of redundant modules, and if there is a coincidence between the internal signals of the redundant modules, it outputs a signal representative of truth, whereas if there is no coincidence, it outputs a signal representative of false. An output signal of each redundant module is a signal of a danger side output representative of truth or a signal of a safety side output representative of false. A final output is a logical AND of an output from the comparator and outputs from the redundant modules.

Accordingly, even if all redundant modules deliver the danger side output, the system will not deliver the danger side output unless there is a coincidence between internal signals of the redundant modules, the internal signals indicating intermediate processes before the final output is obtained. Therefore, even if a danger side output is delivered because of successive errors in the redundant modules during the intermediate calculations before the final output is obtained, the system does not deliver the danger side output because the output of the comparator is made false by errors during the intermediate calculations. It is therefore possible to ensure normality of intermediate processes without limiting only to the final output results.

A conventional logical AND circuit constituted of a plurality of D-flip-flops with an alternating signal being applied to each clock terminal is called a fail safe AND because it has a very small probability of generating a danger side failure. This AND circuit is also associated with, however, a fail-out failure mode (danger mode delivering a danger side output). There is only one failure mode as this fail-out failure mode, in which a clock terminal input of the last stage D-flip-flop among D-flip-flops constituting the fail safe AND appears at a Q output terminal.

Therefore, a third embodiment of the present invention improves fail safe by eliminating a fail-out failure mode.

A logical AND circuit is constituted of a plurality of D-flip-flops with an alternating signal being applied to each clock terminal, and the frequency of a signal applied to the clock terminal of the last stage D-flip-flop is set higher than the highest operating frequency of a circuit connected to the output side of the logical AND circuit.

Accordingly, even if a failure corresponding to a conventional fail-out failure mode occurs in the logical AND circuit constituted of D-flip-flops, the danger side output is not delivered because the circuit connected to the output side of the logical AND circuit does not operate relative to the frequency of the signal output upon occurrence of the failure because the frequency is higher than the highest operating frequency of the circuit. It is therefore possible to eliminate the fail-out failure mode of the fail safe AND circuit.

The comparator performs a comparison check between internal signals of redundant modules.

The comparator outputs an alternating signal as a signal representing truth if there is a coincidence between internal signals of the redundant modules, and outputs a non-alternating signal representing false if there is no coincidence.

An output signal of each redundant module is a signal of a danger side output represented by truth, i.e., an alternating signal, or a signal of a safety side output represented by false, i.e., a non-alternating signal.

A logical AND circuit is constituted of a plurality of D-flip-flops with an alternating signal being applied to each clock terminal, an output of the comparator is applied to the clock terminal of the last stage D-flip-flop, and the frequency of an output of the comparator is set higher than the highest operating frequency of a circuit connected to the output side of the logical AND circuit.

Accordingly, it is possible to ensure normality of intermediate processes without limiting only to the final output result, and in addition it is possible to eliminate the fail-out failure mode of a fail safe AND circuit.

A fourth embodiment of the present invention provides an information processing system with an interface circuit for inputting information from an external equipment, in which power consumption and heat generation of a terminating resistor at an input circuit of the interface circuit can be reduced.

This is achieved by inserting a switching element in series with an input switch and a terminating resistor, and closing the switching element only when an input is sampled and opening it during the other period.

A fifth embodiment of the present invention provides an information processing system with an input interface circuit for manually inputting information, in which a simple and safe momentary switch interface is provided to lower the system cost and improve the system usability.

An interface connected to the switch generates an output signal after it detects the first status of released switch, the second status of depressed switch and the third status of released switch.

A sixth embodiment of the present invention provides an LSI of high reliability formed through logic mix-mount technology, the LSI being suitable for an information processing system requiring reliability, in which a function is provided which is suitable for controlling multi logic mix-mount modules in a chip.

A microcontroller has two memories for storing instructions and data, two processors for executing an instruction read from the memories, and a bus comparator connected to the processors for comparing input/output signals to and from the processors. The memories, processors and bus comparator are integrally formed on the same semiconductor substrate.

In an alternate form, a microcontroller has memories for storing instructions and data, a plurality of processors for executing an instruction read from the memories, and a majority decision circuit connected to the processors for selecting one of the outputs of the processors through majority decision. The memories, processors and majority decision circuit are integrated on the same semiconductor substrate.

### BRIEF DESCRIPTION OF THE DRAWINGS

Fig. 1 shows the overall structure of an information processing system according the present invention.
Fig. 2 shows the structure of a generalized information processing unit.
Fig. 3 shows the structure (register image) of a data output circuit.
Fig. 4 shows the structure (register image) of a data output circuit.
Fig. 5 shows the structure of a data output circuit.
Fig. 6 shows the structure (analog) of a data output circuit.
Fig. 7 shows the structure of a final output circuit using a majority decision circuit.
Fig. 8 shows the structure of a majority decision circuit.
Fig. 9 shows a truth table (normal) of a majority decision circuit.
Fig. 10 shows a truth table (abnormal) of the majority decision circuit.
Fig. 11 shows the structure of a final output circuit using an AND circuit.
Fig. 12 shows a truth table (normal) of an AND circuit.
Fig. 13 shows a truth table (abnormal) of the AND circuit.
Fig. 14 shows the structure of a final output circuit using a fail safe AND circuit.
Fig. 15 illustrates an operation (normal) of the fail safe AND circuit.
Fig. 16 shows the structure of a final output circuit using a median selector circuit.
Fig. 17 shows the structure of a final output circuit with a breaker switch connected to the output side of the circuit.
Fig. 18 shows the structure of an information processing unit with a comparator being provided between modules.
Fig. 19 shows the structure of an information processing unit with a comparator being provided between modules.
Fig. 20 shows the structure of an AND circuit.
Fig. 21 shows the structure of a fail safe AND circuit.
Fig. 22 illustrates a normal operation of a fail safe AND circuit.
Fig. 23 illustrates an abnormal operation of the fail safe AND circuit.
Fig. 24 shows the characteristics of a filter circuit.
Fig. 25 illustrates a countermeasure for a failure of a fail safe AND circuit.
Fig. 26 shows the structure of a fail safe AND circuit.
Fig. 27 shows the characteristics of a filter circuit.
Fig. 28 shows the structure of an information processing unit.
Fig. 29 shows the structure of a fail safe AND circuit.
Fig. 30 shows the characteristics of an output driver circuit.
Fig. 31 shows the structure of an input interface unit.
Fig. 32 shows the structure of an input interface unit.
Fig. 33 shows the structure of an input interface unit.
Fig. 34 shows the structure of an input interface unit.
Fig. 35 shows the structure of an input interface unit.
Fig. 36 is a flow chart illustrating the operation of an input interface unit.
Fig. 37 is a flow chart illustrating the operation of an input interface unit.
Fig. 38 is a flow chart illustrating the operation of an input interface unit.
Fig. 39 is a flow chart illustrating the operation of an input interface unit.
Fig. 40 is a flow chart illustrating the operation of an input interface unit.
Fig. 41 illustrates the operation of an input interface unit.
Fig. 42 illustrates the operation of an input interface unit.
Fig. 43 illustrates the relationship between peripheral circuits of an input interface unit.
Fig. 44 shows the structure of an input interface.
Fig. 45 shows the structure of an input interface.
Fig. 46 illustrates the operation of a user interface unit.
Fig. 47 shows the structure of a user interface unit.
Fig. 48 illustrates the status transition of a switch.
Fig. 49 illustrates a failure of a switch.
Fig. 50 illustrates the operation of another switch.
Fig. 51 illustrates a countermeasure for suppressing chattering.
Fig. 52 shows the status transition of a switch.
Fig. 53 illustrates the operation of a switch with a time-out monitor function.
Fig. 54 shows the status transition of a switch.
Fig. 55 illustrates the operation of a switch with a time-out monitor function.
Fig. 56 shows the status transition of a switch.
Fig. 57 shows the structure of a user interface unit.
Fig. 58 shows the structure of a user interface unit.
Fig. 59 shows the structure of a user interface unit.
Fig. 60 shows the structure of a user interface unit.
Fig. 61 illustrates the operation of a switch.
Fig. 62 illustrates how a switch is used.
Fig. 63 is a flow chart illustrating the operation of a fail safe system.
Fig. 64 shows a layout of a chip.
Fig. 65 is a cross sectional view of the chip.
Fig. 66 shows the internal circuit of the chip.
Fig. 67 shows the structure of a bus comparator.
Fig. 68 shows the layout of a chip.
Fig. 69 shows the internal circuit of the chip.

### DETAILED DESCRIPTION OF THE PREFERRED EMBODIMENTS

Embodiments of the invention will be described with reference to the accompanying drawings.

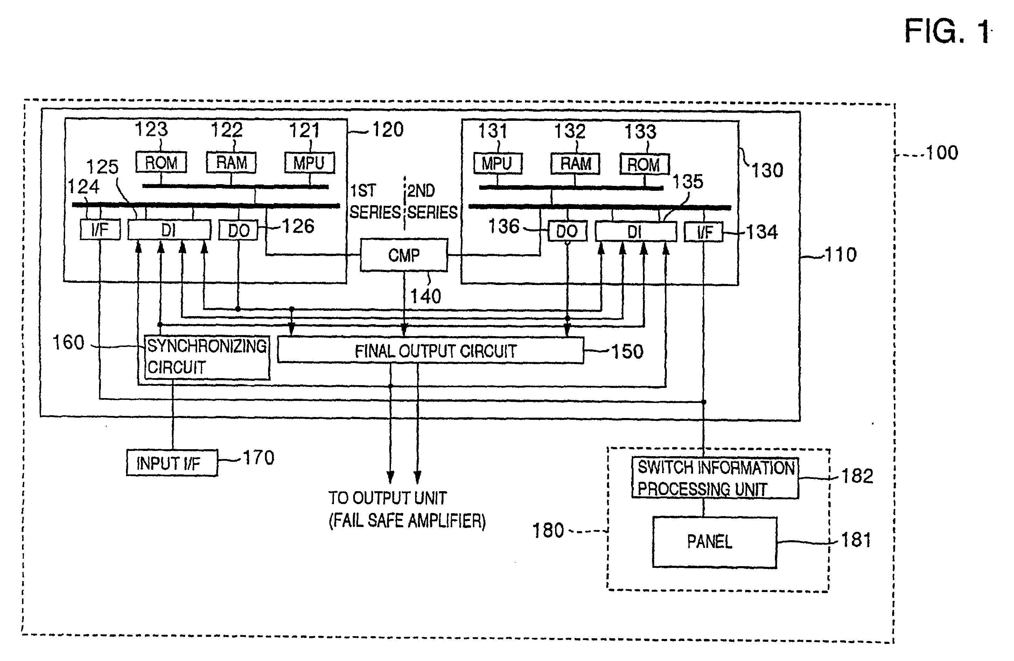

Fig. 1 shows the overall structure of an information processing system according to the present invention. This information processing system is constituted of an input interface unit (input I/F) 170 for receiving information from external equipments, a user interface unit (user I/F) 180 for a user to enter information, and an information processing unit 110 for performing a predetermined process such as processing control information of external equipments, in accordance with information input from the input interface unit 170 by external equipments.

The user interface unit 180 is constituted of a panel unit 181 and a switch information processing unit 182. The panel unit 181 is provided with switches for a user to input information, and with lamps for indicating a depression of each switch by a user. The switch information unit 182 detects a depression of each switch and outputs necessary information.

The information processing unit 110 is constituted of modules 120 and 130, a synchronizing circuit 160, a comparator circuit (CMP) 140, and a final output circuit 150. The information processing unit 110 transfers information input from the input interface unit 170 by an external equipment to the two modules 120 and 130 at the same timing, the two modules 120 and 130 performing predetermined processes. The processed results are input to the comparator circuit (CMP) 110 and to the final output circuit 150 to determine a final output.

The two modules 120 and 130 are constituted of CPUs 121 and 131, RAMs 122 and 132, interface circuits (I/Fs) 124 and 134, data input circuits (DIs) 125 and 135, and data output circuits (DOs) 126 and 136. The two modules 120 and 130 perform the same operation. The operation of the module will be described taking as an example one module 120 among the two modules. Data supplied from an external equipment is input via the data input circuit 125 to the module 120. The input data is processed by CPU 121 in accordance with the programs stored in ROM 125. The data processed by CPU 121 is input via the data output circuit (DO) 126 to the final output circuit 150.

In this example, although two modules are used, the number of modules may be increased.

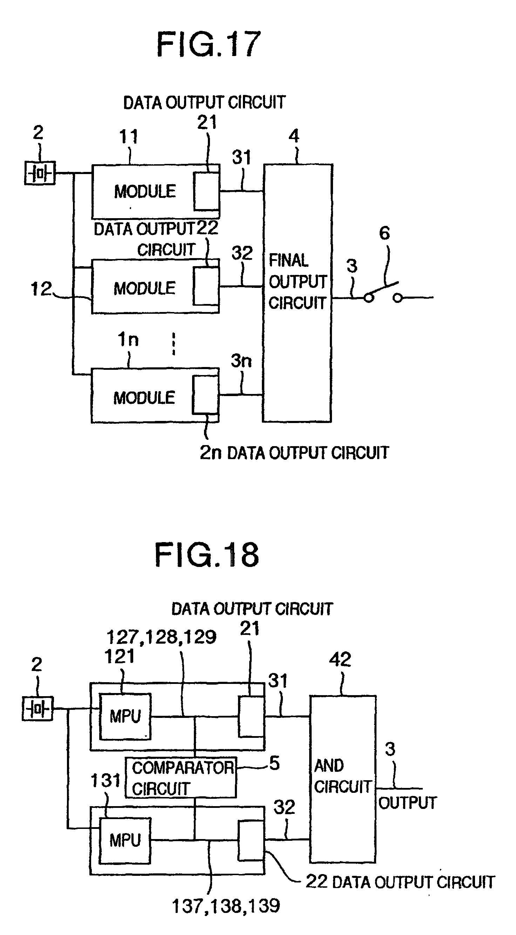

The detailed description of the information processing unit 110 shown in Fig. 1 will be later given with reference to Fig. 18 and other drawings to follow. In the following, inspecting the final output circuit 150 of a generalized information processing unit 110 will be described.

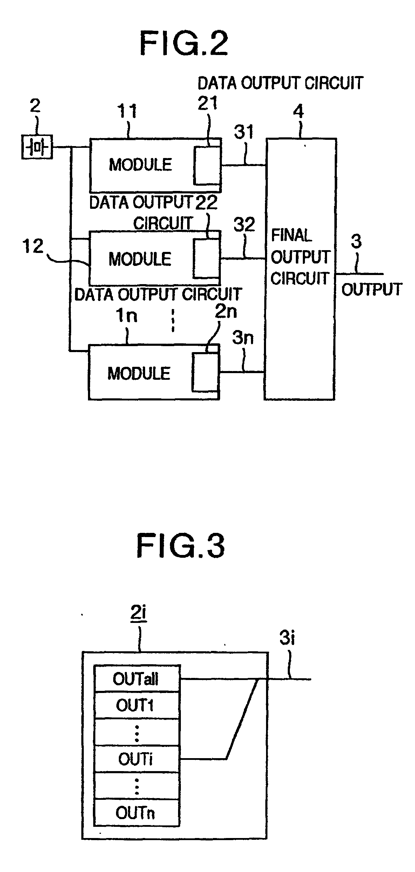

Fig. 2 shows the fundamental structure of a generalized information processing unit 110. This information processing unit 110 is constituted of a clock 2, a plurality of modules 11 to 1n, and a final output circuit 4. The modules 11 to 1n are provided with data output circuits 21 to 2n, respectively.

The modules 11 to 1n process data synchronously with the clock 2, and output data via the data output circuits 21 to 2n to the final output circuit 4. The modules 11 to 1n shown in Fig. 2 have the same structure as the modules 120 and 130 shown in Fig. 1, and the data output circuits 21 to 2n of the modules 11 to 1n have the same structure as the data output circuits 126 and 136 shown in Fig. 1. The final output circuit 4 shown in Fig. 2 has the same structure as the final output circuit 150 shown in Fig. 1. The clock 2 is used for synchronously operating a plurality of modules 21 to 2n, and performs the same function as the synchronizing circuit 160 shown in Fig. 1.

If any one of the redundant modules 11 to 1n cannot generate a normal output because of failure, the final output circuit 4 can select a normal output to continue the normal operation. Examples of the final output circuit 4 for selecting a normal output are, as will be later described, a majority decision circuit 41, an AND circuit 42, and a median selector circuit 43.

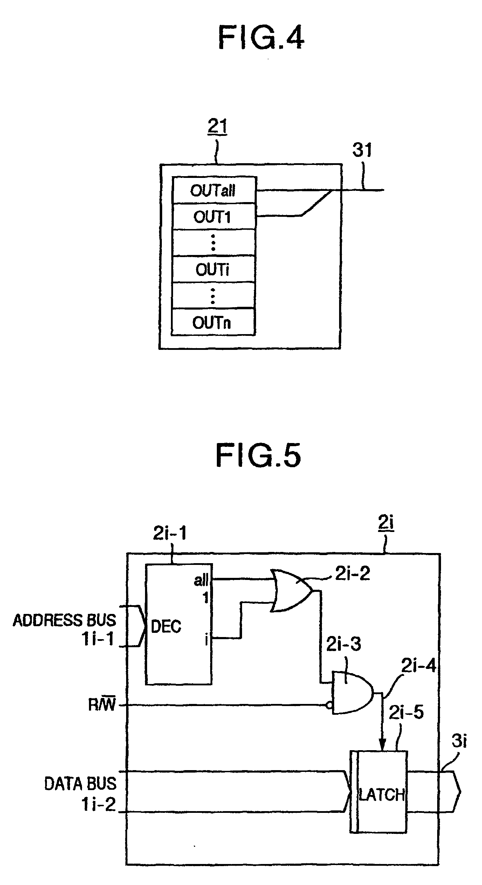

Fig. 3 shows the structure of a data output circuit 2i of a module 1i (where i is a module number), in the form of address image. The data output circuit 2i has registers OUTall, OUT1,..., OUTn. When data is written in the register OUTall in which data is written common by all modules 11 to 1n, or in the register OUTi in which data is written only by the corresponding module 1i, the data output circuit 2i delivers an output 3i corresponding to the written data. For example, as shown in Fig. 4, when data is written in the register OUTall or in the register OUT1 of the first module 11, the data output circuit 21 delivers an output 31 corresponding to the written data.

With the structure shown in Figs. 2 to 4, the redundant modules 11 to 1n can synchronously execute the same instruction and deliver different outputs 31 to 3n, so that a test pattern for operation confirmation can be supplied to the final output circuit 4. For example, if the modules 11 to 1n write data into the resisters OUTi, only the module 1i delivers an output 3i corresponding to the written data. If the modules 11 to 1n write different data into the registers OUT1 to OUTn, the modules 11 to 1n deliver different outputs 31 to 3n. In a normal operation, the modules 11 to 1n write data into the registers OUTall, and the modules 1i to 1n deliver outputs 31 to 3n corresponding to the written data.

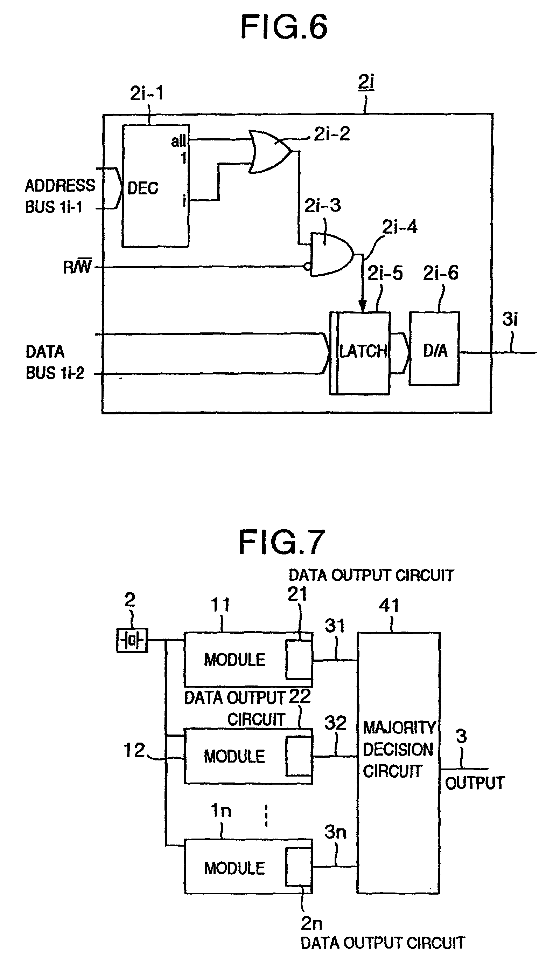

Figs. 5 and 6 show the structure in block form of the data output circuit 2i of the module 1i shown in Fig. 6. An address decoder 2i-1 decodes a signal on an address bus 1i-1 and outputs a signal to a logical OR 2i-2 only when the address corresponds to the register OUTall or OUTi, so that the logical OR 2i-2 outputs "H". A logical ANd 2i-3 is obtained between an output of the logical OR 2i-2 and an R/W# signal, and a latch signal 2i-4 is set to "H" only when an write access is performed and the address corresponds to the register OUTall or OUTi. A signal on a data bus 1i-2 is latched by a latch 2i-5 in response to a latch signal 2i-5. In the structure shown in Fig. 5, the data latched by the latch 2i-5 is directly delivered as an output 3i. In the structure shown in Fig. 6, the data latched by the latch 2i-5 is converted into an analog signal by a digital/analog converter 2i-6 and delivered as the output 3i. If the data output circuit 2i is of the type outputting a digital signal as shown in Fig. 5, a majority decision circuit 41 or AND circuit 42 to be described hereinunder is used as the final output circuit 4. If the data output circuit 2i is of the type outputting an analog signal as shown in Fig. 6, a median selector circuit 43 to be described hereinunder is used as the final output circuit 4.

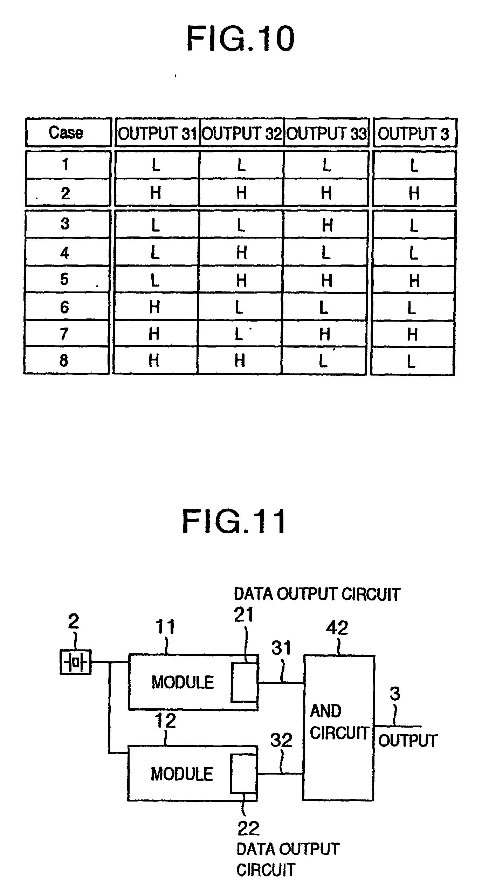

Fig. 7 shows a structure of a majority circuit 41 used as the final output circuit 4. The internal structure of a three-input majority decision circuit 41 is shown in Fig. 8, and the truth table during a normal operation thereof is shown in Fig. 9. An example of the truth table, when an output of a logical OR 411 constituting the majority decision circuit 41 has a 0 fixed failure (stuck-at-0 failure), is shown in Fig. 10. As shown in Fig. 10, in the case of the 0 fixed failure of an output of the logical OR 411, an input/output relation different from the normal operation is only the input pattern of Case 8. Therefore, in order to detect this failure, it is sufficient if the redundant modules 11 to 13 deliver the outputs 31 to 33 corresponding to the input pattern of Case 8. With the structure shown in Figs. 2 to 6, since the modules 11 to 13 can independently deliver desired outputs 31 to 33, they can deliver outputs 31 to 33 of all patterns without being limited only to Case 8. Accordingly, failures of all modes of the majority decision circuit 41 can be detected, without limiting only to the 0 fixed failure of the output of the logical OR 411 given as an example above.

With conventional techniques not adopting this invention, if the redundant modules 11 to 13 are all normal, the inputs of only Cases 1 and 2 of the truth table shown in Fig. 9 are supplied in general. Therefore, a failure of the majority decision circuit 41 cannot be detected and the failure remains latent. With such a latent failure, a failure in any one of the redundant modules 11 to 13 cannot be remedied. For example, even if the 0 fixed failure of an output of the logical OR 411 occurs, outputs not different from the normal operation can be obtained if all the redundant modules 11 to 13 are normal. However, if an output 33 of the module 13 only takes "L" instead of a normal "H" because of some causes, the output 3 of the majority decision circuit 41 also takes "L" instead of "H", and a normal operation cannot be performed.

Fig. 11 shows a structure of an AND circuit 42 used as the final output circuit 4. With this structure, outputs 31 and 32 of the redundant modules 11 and 12 are supplied to the AND circuit 42 which delivers an output 3. In this case, the output 3 takes "H" only when both the outputs 31 and 32 of the modules 11 and 12 take "H". Namely, the output 3 takes "L" if one of the outputs 31 and 32 of the modules 11 and 12 takes "L". Accordingly, if an L output is used as a safety side output, a fail safe system can be realized.

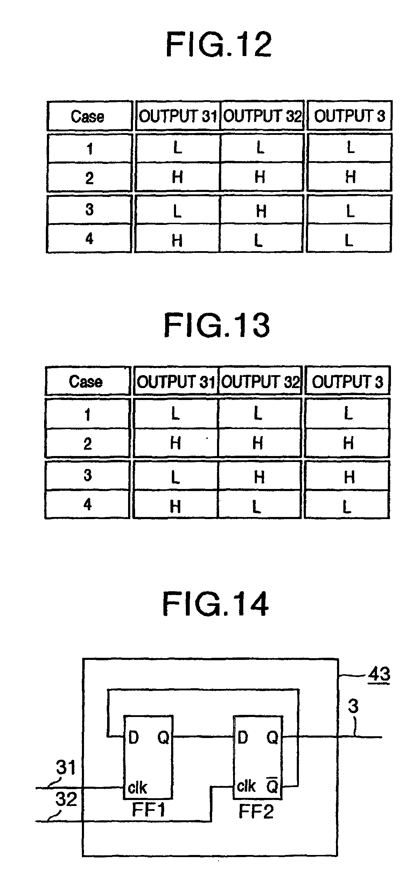

A truth table of the AND circuit 42 in a normal operation is shown in Fig. 12. A truth table during a failure when the output 32 is directly delivered as the output 3, is shown in Fig. 13. This failure mode results from a short of inner wiring patterns of the AND circuit 42. This failure can also be detected only when the input pattern is Case 3 or 4. Therefore, in order to detect this failure, it is sufficient if the redundant modules 11 and 12 deliver the outputs 31 and 32 corresponding to the input pattern of Case 3 or 4. With the structure shown in Figs. 2 to 6, since the modules 11 and 12 can independently deliver desired outputs 31 and 32, they can deliver outputs 31 and 32 of all patterns without being limited only to Case 3 or 4. Accordingly, failures of all modes of the AND circuit 42 can be detected, without being limited only to the failure that the output 32 is directly delivered as the output 3 given as an example above.

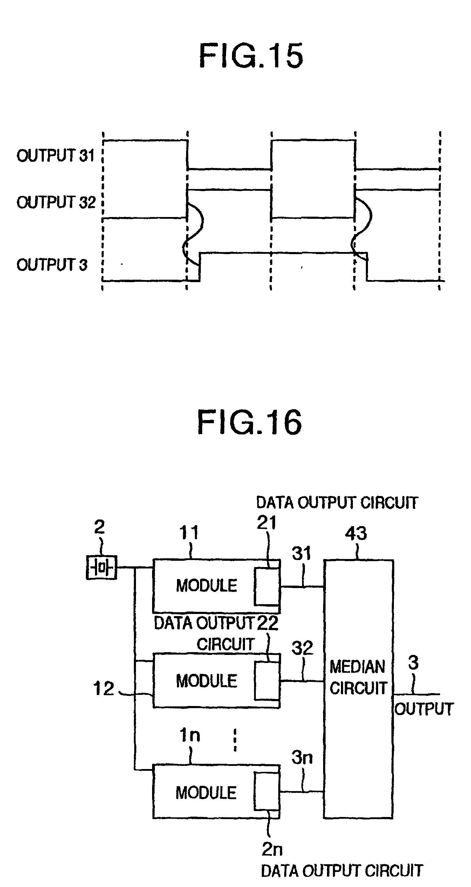

Fail safe can also be realized by using a circuit made of flip-flops such as shown in Fig. 14, as the AND circuit 42. As shown in Fig. 15, this circuit delivers an alternating signal as the output 3 only when both the outputs 31 and 32 are alternating signals. Namely, if the alternating signal is made true and the other signals are made false, this circuit provides the operation same as the logical AND. A possibility of erroneously outputting an alternating signal because of a failure of this circuit is very small so that this circuit is called a fail safe AND.

Fig. 16 shows an example of a median selector circuit 43 as the final output circuit 4. The median selector circuit 43 selects and outputs a median of input analog values. If all the modules 11 to 1n are normal, outputs 31 to 3n of the same value are delivered theoretically. Therefore, it is impossible to confirm that the median selector circuit 43 has a function of "selecting and outputting a median of input analog values". In practice, even if the digital values of the outputs 31 to 3n are same, these digital values have a variation caused by conversion errors of digital analog converters, and the median selector circuit 43 selects and outputs a median of values with such a variation. It can be seemingly confirmed that the median selector circuit 43 has the function of "selecting and outputting a median of input analog values". However, this variation is difficult to be discriminated because of quantization errors of analog/digital converters which fed back the output 3. With the above-described structure, any one of the outputs 31 to 3n can take a different value so that the above function of the median selector circuit 43 can be realized.

Fig. 17 shows the structure of the final output circuit 4 provided with a breaker switch 6 for breaking the output 3 of the circuit 4. With this structure, if an abnormal state of the final output circuit is detected, the breaker switch 6 is opened to shut the output and suppress an erroneous output.

Next, the structure of ensuring normality of intermediate processes to be executed by each module will be described.

As shown in Fig. 11, since the modules 11 and 12 can perform the same operation in synchronization with the clock 2, the modules 11 and 12 can detect a malfunction caused by failures at an earlier stage, through comparison check by a comparator circuit 5 shown in Fig. 18. The comparator circuit 5 compares signals on data buses 127 and 137 for transfer of data of the modules 11 and 12, on address buses 126 and 138 for transfer of address signals, and on control buses 129 and 139 for transfer of control signals. In this case, the error detection rate can be improved if a self-checking comparator is used as the comparator circuit 5, because missing a detection of a malfunction to be caused by a failure of the comparator itself can be avoided. The self-checking comparator is described in JP-A-8-17158 already filed by the present inventors. The error detection rate can be improved further if the modules 11 and 12 are synchronously operated with a half clock being shifted therebetween, because of a smaller probability of generation of the same error, as described in JP-A-8-171581 already filed by the present inventors. Comparison check of signals on the buses inside of the modules 11 to 1n shown in Fig. 17 are also applicable to each structure shown in Figs. 2 to 10, not limiting only to the structure shown in Fig. 11. The comparator circuit 5 shown in Fig. 17 has a structure similar to the comparator circuit 140 shown in Fig. 1.

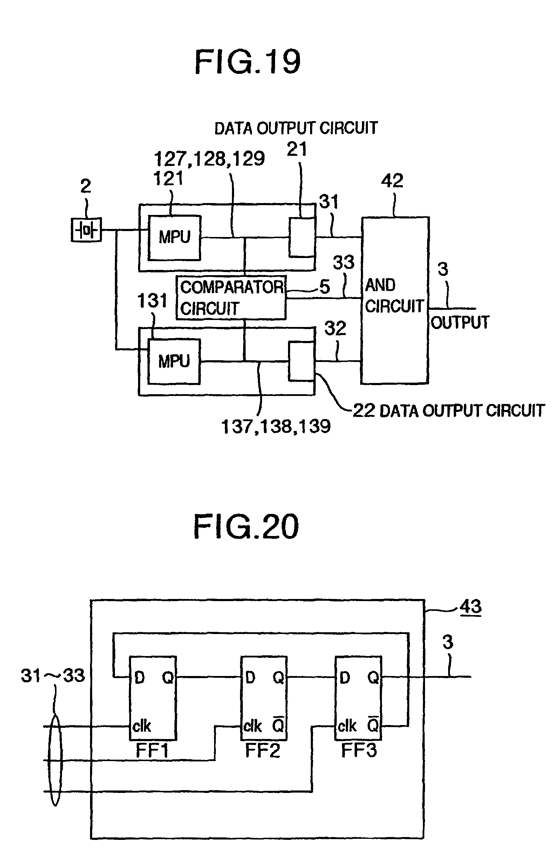

Fig. 19 shows another structure obtained by improving the structure shown in Fig. 18 in which an output 33 of the comparator circuit 5 in addition to the outputs 31 and 32 of the modules 11 and 12 are input to the AND circuit 42. This structure is similar to the structure that the final output circuit 150 of the information processing unit 110 shown in Fig. 1 is replaced by the AND circuit 42. With this structure, the AND circuit 42 delivers an output 3 only when the outputs 31 and 32 of the modules 11 and 12 are delivered and signals on data buses 127 and 137, on address buses 128 and 138, and on control buses 129 and 139 are coincident with each other. In other words, the output 3 is delivered not only when the outputs 31 and 32 of the modules 11 and 12 are delivered but also when the intermediate process results up to the final output become coincident with each other. In this manner, safety and fail safe can be improved because the comparison check of the outputs is performed at multiple stages, and errors can be detected at earlier stage because incoincidence during intermediate processes can be detected.

If the circuit made of flip-flops such as shown in Fig. 20 is used as the AND circuit, it is possible to realize fail safe of the AND circuit itself.

Next, the structure capable of improving fail safe will be described.

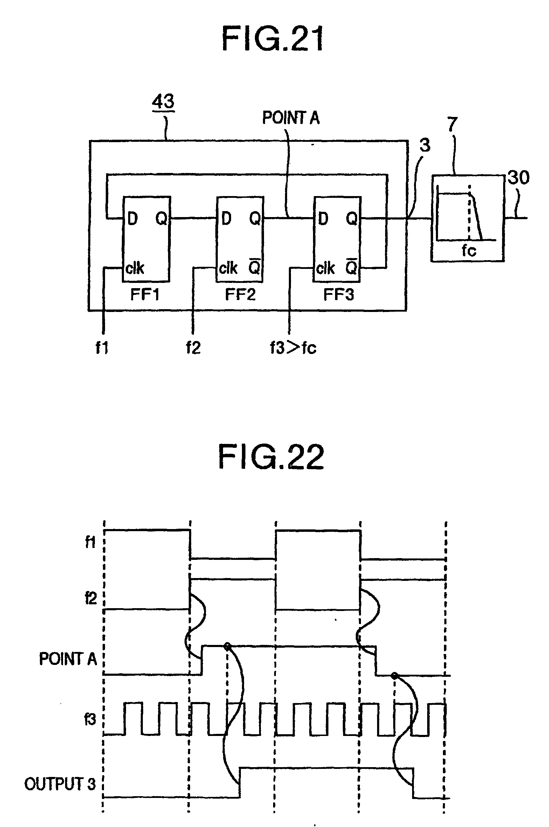

Fig. 21 shows a structure which can eliminate a fail-out failure mode of a fail safe AND circuit. In this example, a signal having a frequency f3 higher than the highest operating frequency fc of a filter circuit at the last stage of the fail safe AND circuit is input to a clock terminal of a flip-flop FF1 at the last stage of flip-flops constituting the fail safe AND circuit.

As shown in Fig. 22, in a normal state, this circuit delivers an alternating signal as an output 3 only when all the alternate signals f1, f2 and f3 are input. This operation is the same as a general fail safe AND circuit.

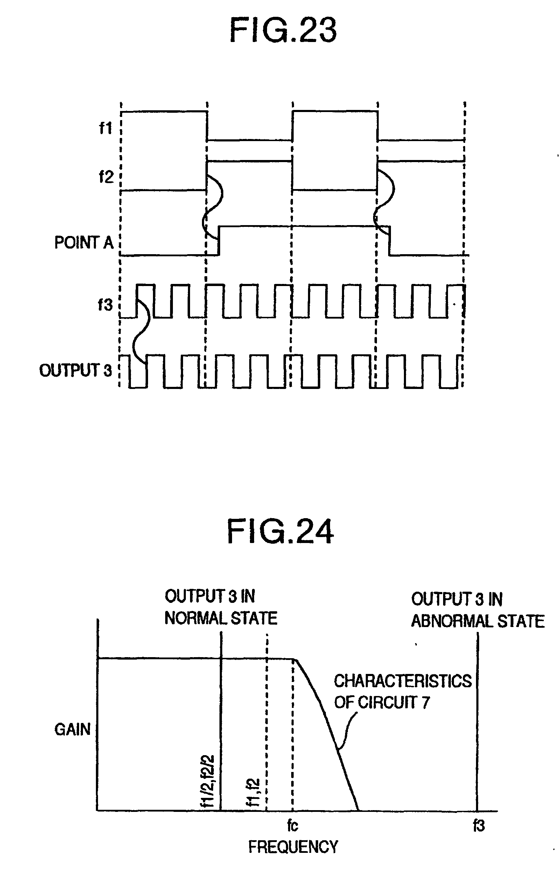

A unique fail-out failure mode of the fail safe AND circuit is a mode in which a clock input of a flip-flop itself is output as a Q output. If such a failure mode occurs at the last stage flip-flop, an alternating signal is delivered as the output 3 as shown in Fig. 23 if an alternating signal is input to the last stage flip-flop, irrespective of the states of other inputs. In this case, the frequency of the output 3 is f3 which is higher than the highest operating frequency fc of the filter circuit 7 at the last stage of the fail safe AND circuit. Therefore, as shown in Fig. 24, since the filter circuit 7 cannot operates at a frequency higher than the highest operating frequency fc, any output is delivered from an output terminal 30 of the filter circuit 7. Accordingly, even if a failure occurs in which a clock input itself of the last stage flip-flop is delivered as the Q output, a danger side output will not be erroneously delivered so that fail safe is ensured.

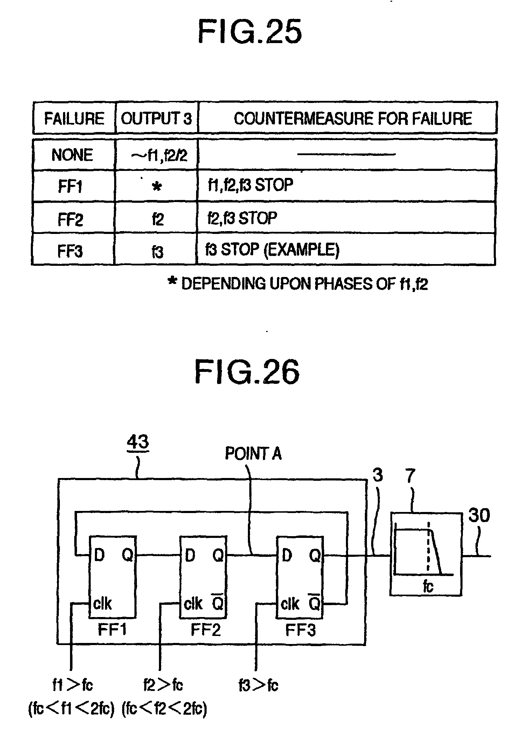

Fig. 25 illustrates the outputs 3 obtained when a failure occurs and a CLK input itself of each flip-flop constituting the fail safe AND circuit is output as the Q output, and illustrates corresponding countermeasures for stopping the outputs 3. As seen from Fig. 25, a failure can be detected by monitoring the output 3. With the structure shown in Fig. 11, a test pattern can be input efficiently so that latency of a failure can be avoided. The number of countermeasures for stopping the output 3 during a failure decreases more at the later stage flip-flop in the order of FF1, FF2 and FF3. At the last stage FF3 in particular, in a structure other than this structure, there is no countermeasure for stopping the output 3 during a failure, except that the f3 input is stopped. Namely, without this structure, if a failure occurs in which f3 is continuously output from a flip-flop other than FF3 by some reasons, the output 3 is delivered continuously. Accordingly, because of a failure of FF3 and a failure of an fs generating circuit, i.e., because of a double-failure, the system delivers a danger side output and becomes fail-out. In contrast, in the case of FF1 and FF2, fail-out occurs only when a quadruple-failure or triple-failure occurs. In a system whose fail-out may affect people's lives, it is essential to ensure strict safety and avoid fail-out even under a multiple-failure. With this structure, an output can be stopped and fail-out can be avoided even under a double-failure which has heretofore resulted in fail-out.

Fig. 26 shows a structure capable of preventing adverse effects of a failure mode in which clock inputs of all flip-flops of the fail safe AND circuit are delivered from Q outputs. With this structure, all input frequencies f1, f2 and f3 of the clock terminal of flip-flops constituting the fail safe AND circuit are set higher than the highest operating frequency fc of the filter circuit 7 at the last stage of the fail safe AND circuit. With this structure, even if a failure mode occurs in which one of the flip-flops constituting the fail safe AND circuit delivers its clock input as the Q output, no output 30 is delivered because the output 3 has a frequency higher than the highest operating frequency fc of the last stage filer circuit 7 and the filter circuit 7 cannot operate. With this structure, therefore, it is possible to eliminate the adverse effects of a failure mode in which the clock inputs of all flip-flops constituting the fail safe AND circuit are delivered as the Q outputs.

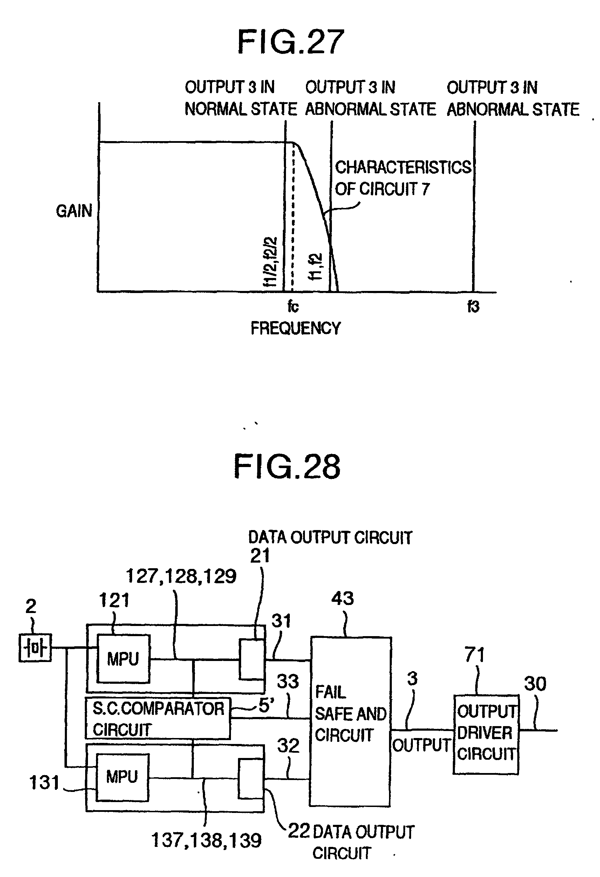

If all the input frequencies f1, f2 and f3 are considerably higher than the highest operating frequency of the filter circuit 7, an output of the fail safe AND circuit even under a normal operation without any failure has a frequency higher than the highest operating frequency fc. In this connection, if f1 and f2 are set, for example, fc < f1 < 2fc and fc < f2 < 2fc, then outputs in the orders of f1/2 and f2/2 can be obtained as illustrated in Fig. 22 and the output 3 under a normal operation has a frequency lower than the highest operating frequency fc of the filter circuit 7 and the output 3 under an abnormal operation has a frequency higher than the highest operating frequency fc of the filter circuit, as shown in Fig. 27. With this structure, therefore, the adverse effects of a failure mode in which clock inputs of all flip-flops constituting the fail safe AND circuit are delivered as Q outputs, can be eliminated.

As described above, with the structure shown in Fig. 26, if the filter circuit 7 at the last stage of the fail safe AND circuit has the attenuation characteristics sharp in the high frequency band, it is possible to eliminate the adverse effects of a failure mode in which clock inputs of all flip-flops constituting the fail safe AND circuit are delivered as Q outputs. In contrast, with the structure shown in Fig. 20, although it is possible to eliminate the adverse effects of a failure mode in which clock inputs of all flip-flops constituting the fail safe AND circuit are delivered as Q outputs, it is not necessary for the filter circuit 7 at the last stage of the fail safe AND circuit to have the attenuation characteristics sharp in the high frequency and alto it is not necessary to use the filter circuit because the fail safe AND circuit can be realized by using the frequency characteristics of general circuits.

In realizing the operations illustrated with Figs. 21 to 27, a frequency higher than the highest operating frequency fc of the filter circuit 7 becomes necessary. A signal of such a high frequency may be generated in the following manner.
(a) Using an existence notice signal of each redundant module.
(b) Using a clock signal.
(c) Using a self-checking comparator disclosed in JP-A-7-234801.

Of these, a method (c) will be described.

A three-input fail safe AND circuit has been described for the structures shown in Figs. 21 to 27 for the simplicity purpose. It is obvious that a general N-input fail safe AND circuit may be used.

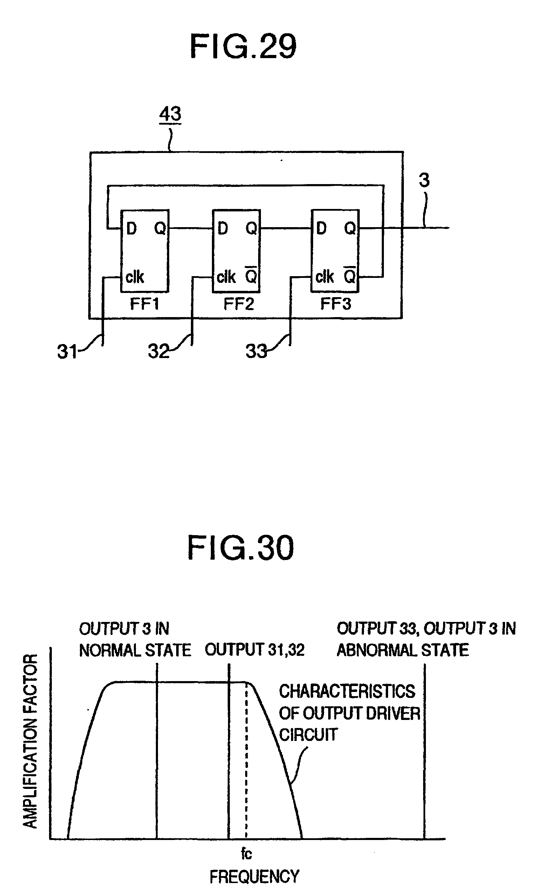

Fig. 28 shows another structure capable of providing a fail safe system ensuring normality of intermediate processes and eliminating the fail-out failure mode of a fail safe AND circuit by using synergistic effects. This structure is basically the same as the structure shown in Fig. 19. In the structure shown in Fig. 28, a self-checking comparator circuit 5' is used instead of a general comparator circuit, and a fail safe AND circuit is used instead of a general AND circuit. This fail safe AND circuit is made of flip-flops shown in Fig. 29, the flip-flop FF3 at the last stage is input with an output 33 of the self-checking comparator circuit 5', and an output of the fail safe AND circuit is supplied to an output driver circuit 30 which delivers an output 30.

This structure realizes fail safe by delivering an alternating signal as the output 3 only when all the outputs 31, 32 and 33 deliver an alternating signal.

In order to realize this structure, the self-checking comparator circuit 5' is also required to deliver an alternating signal as the output 33 when signals on data buses 127 and 137, on address buses 128 and 138 and on control buses 129 and 139 of the modules 11 and 12 are coincident. As already described, the self-checking comparator circuit described in JP-8-17158 filed by the present inventors satisfies the above conditions because it delivers an alternating signal as the output 33 only when signals to be compared are coincident with each other and the comparator circuit itself is in a normal state.

Consider now the frequency relationship of inputs and an output of the fail safe AND circuit in a normal state. Since the output 33 of the self-checking comparator circuit 5' inverts at each bus cycle, it has the frequency same as the bus cycle (generally about several MHz to several hundreds MHz). The outputs 31 and 32 of the modules 11 and 12 invert upon an access to the output interfaces 21 to 2n by software so that they are considerably lower (about several hundreds Hz to several kHz) than the output 33 of the self-checking comparator circuit 5. The output of the fail safe AND circuit inverts after all the output 33 of the self-checking comparator circuit 5 and the outputs 31 and 32 of the modules 11 and 12 cyclically rise. Therefore, the output of the fail safe AND circuit has a half of the frequency of the outputs 31 and 32 of the modules 11 and 12. As shown in Fig. 30, the highest operating frequency fc of the output driver circuit 71 connected with the output of the fail safe AND circuit is generally about 100 Hz to several kHz if it is assembled by using general power elements.

Consider next an occurrence of a failure of the above-described mode. Upon occurrence of a failure, the output 33 itself of the self-checking comparator circuit 5 is delivered as the output 3 of the fail safe AND circuit. Therefore, as shown in Fig. 30, the output 30 of the fail safe AND circuit is greatly apart from the bandwidth of the output driver circuit 71. Even if a failure of the fail-out mode occurs, fail safe can be ensured because no signal appears as the output 30.

Next, the input interface unit 170 shown in Fig. 1 will be described.

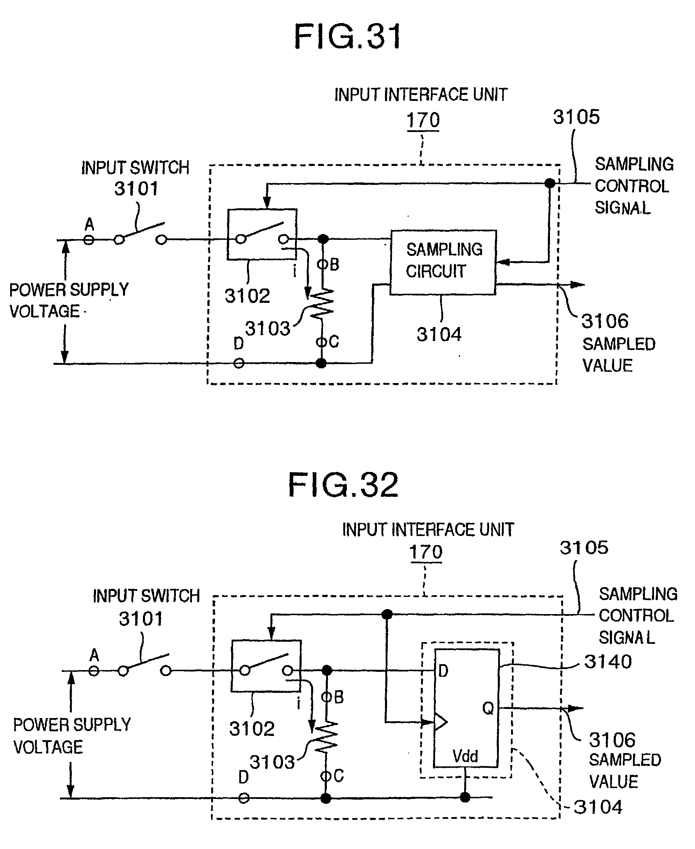

Fig. 31 shows the fundamental structure of the input interface unit 170. The function of the input interface unit is to detect an open/close of an input switch (contact) 3101 such as a relay and other types of switches. A power supply voltage is applied via the input switch 3101 and a switching element 3102 to a sampling circuit 3104. Since the input impedance of the sampling circuit is generally large, most of the current i flowing through the input switch 3101 and switching element 3102 flows through a terminating resistor 3103. In other words, the value of the terminating resistor 3103 determines the current i flowing through the input switch 3101 and switching element 3102. The sampling circuit 3104 samples an applied voltage in response to a sampling control signal 3105 to detect an open/close of the input switch 3101. If the input switch 3101 is closed (on-state), the power supply voltage is applied to the input of the sampling circuit 3104 and an H level is output as a sampled value 3106. IF the input switch 3101 is opened (off-state), the power supply voltage is not applied to the input of the sampling circuit 3104 and an L level is output as the sampled value 3106. The switching element 3102 opens and closes in response to the sampling control signal 3105. It is closed (turned on) when the sampling control signal 3105 is received, and opened (turned off) when the sampling control signal 3105 is not received. Namely, the switching element 3102 is closed (turned on) only at an instance when the sampling circuit 4 performs a sampling operation to flow current, and during the other period it is opened (turned off) not to flow current. With this structure, power consumption of the terminating resistor 3103 can be reduced.

The switching element 3102 may be connected at A, B, C or D point shown in Fig. 31 with the same. advantageous effects as above. The switching element 3102 may be a relay, a semiconductor relay, or a semiconductor element such as a transistor.

Fig. 32 shows the structure of the sampling circuit 3104. As shown, the sampling circuit 3104 is constituted of a latch made of a D-flip-flop. Although not shown in this structure, in order to provide a high resistance to noises, the sampling circuit may be electrically isolated by connecting photocouplers to the input side of the D-flip-flop.

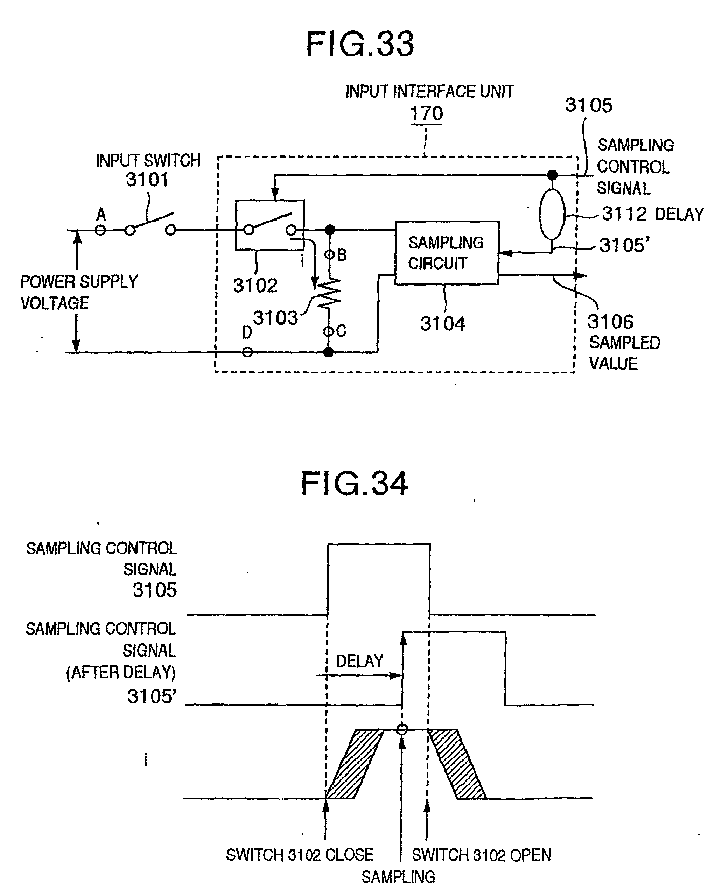

Fig. 33 shows the structure taking a delay of the switching element 3102 into consideration. Because of a delay of the switching element 3102, it takes a time for the switching element 3102 to close after the sampling control signal 3105 turns on. A delay element 3112 is therefore provided to delay the sampling control signal 3105 by the delay time of the delay element 3112, and the delayed sampling control signal 3105' is supplied to the sampling circuit 3104.

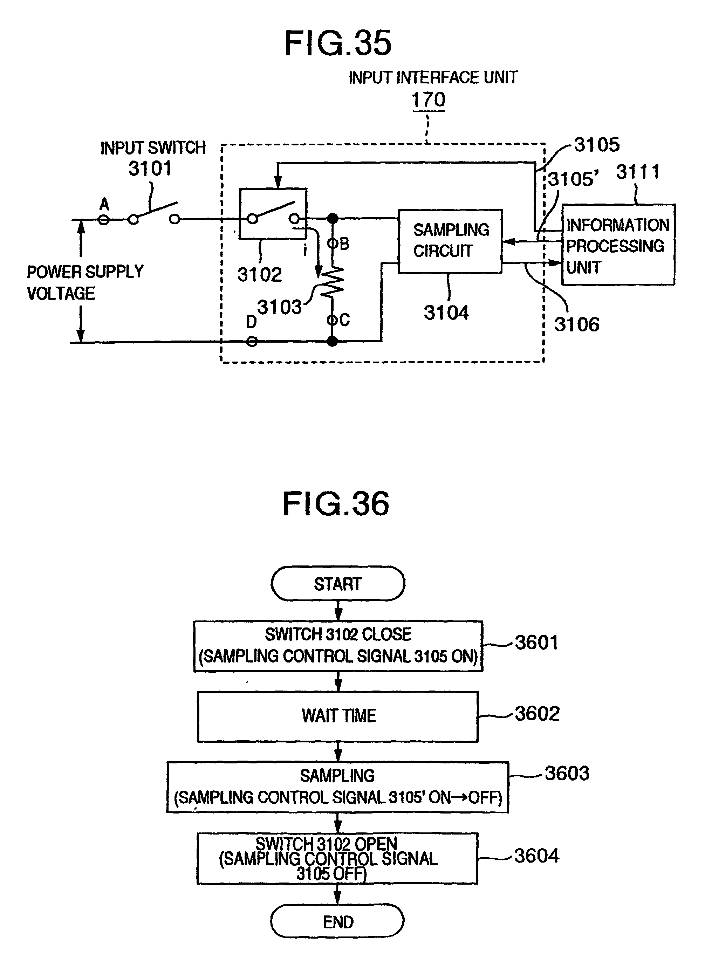

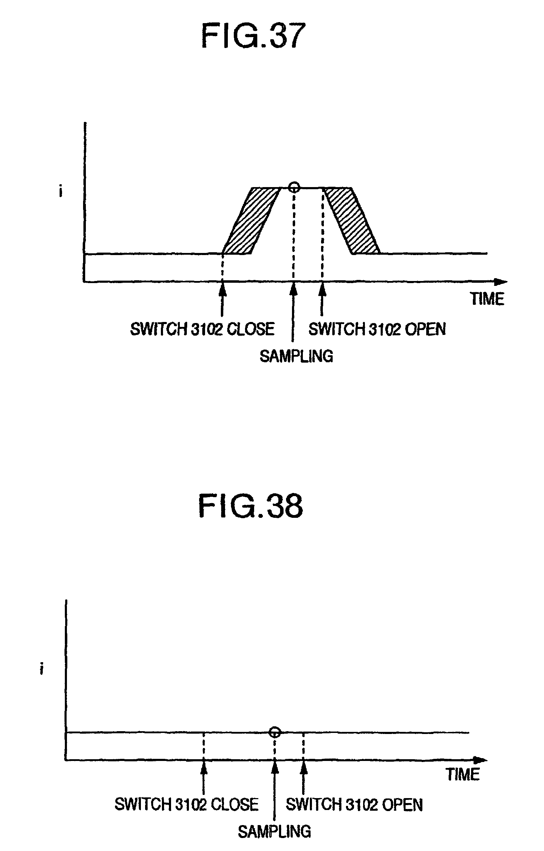

Fig. 35 shows another structure in which an information processing unit 3111 generates the sampling control signal 3105 and the delayed sampling control signal 3105'. In accordance with the sequence shown in Fig. 36, the information processing unit 3111 generates the sampling control signal 3105 and the delayed sampling control signal 3105'. First at Step 3601 the sampling control signal 3105 is turned on to close the switching element 3102. At Step 3602, a stand-by state continues for the delay time of the switching element 3102. At Step 3603 the sampling control signal 3105' is turned on to sample the power supply voltage. The sampling control signal 3105' may be turned off immediately after the sampling operation after it was turned on. At Step 3604 the sampling control signal 3105 is turned off immediately after the sampling operation to open the switching element 3102 and stop the current i to thereby reduce power consumption by the terminating resistor 3103. Fig. 37 shows a change in the current i during the above Steps while the input switch 3101 is closed. Fig. 38 shows a change in the current while the input switch 3101 is opened.

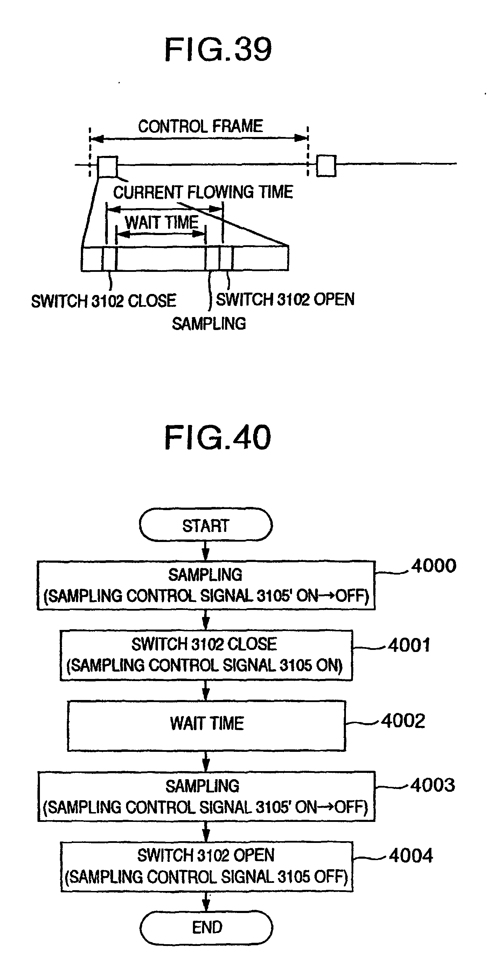

With this structure, the current i flows only during a very short time in a control frame as shown in Fig. 39, so that power consumption by the terminating resistor 3103 can be reduced considerably. For example, assuming that the control frame is 10 ms, the flow time of the current i is 0.1 ms, and the sampling is performed once per one frame, then the duty cycle of a flow of the current i is 1 %. The power consumption by the terminating resistor 3103 is therefore reduced by 1/100. It is therefore possible to use a resistor having a small power capacity as the terminating resistor 3103, to thus make the system compact. Since heat generation in the system becomes small, spaces for ventilation holes or the like for heat dissipation are not necessary and the system can be made more compact.

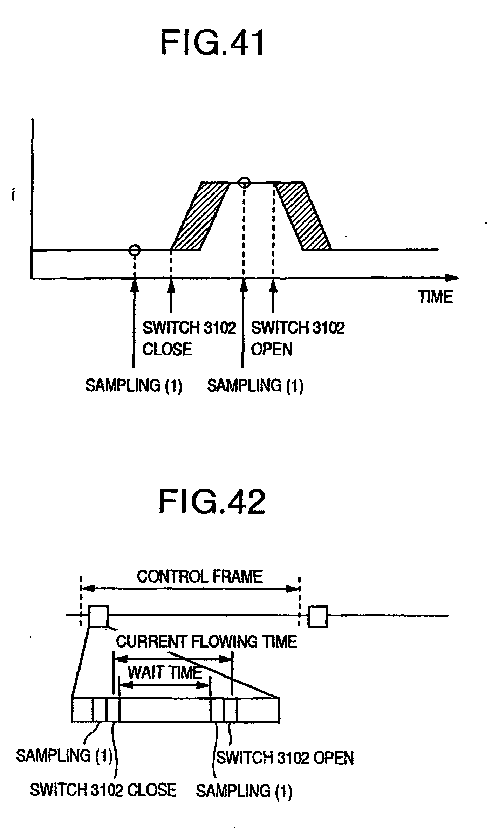

Fig. 40 illustrates another structure in which fail safe is realized by using an alternating signal to detect a stuck-at failure of the input interface unit. In this structure, a sampling operation is performed not only during the on-state of the switching element but also during the off-state. If the sampled value 3106 is H while the switching element 3102 is closed and if the sampled value 3106 is L while it is opened, then it is recognized that the input switch 3101 was closed. If the sampled value 3106 is L while the switching element 3102 is closed and if the sampled value 3106 is L while it is opened, then it is recognized that the input switch 3101 was opened. If the sampled value 3106 is H while the switching element 3102 is closed and if the sampled value 3106 is H while it is opened, then it is recognized that a stuck-at-1 failure of the input interface circuit occurred. First at Step 4000 a sampling operation is performed while the switching element is open. At Step 4001, the sampling control signal 3105 is turned on to close the switching element 3102. At Step 4002 a stand-by state continues for the delay time of the switching element 3102. At Step 4003 the sampling control signal 3105' is turned on to perform a sampling operation. The sampling control signal 3105' may be turned off immediately after the sampling operation after it was turned on. At Step 4004 the sampling control signal 3105 is turned off immediately after the sampling operation to open the switching element 3102 and stop the current i to thereby reduce power consumption by the terminating resistor 3103. Fig. 41 shows a change in the current i during the above Steps while the input switch 3101 is closed.

With this structure, the current i flows only during a very short time in a control frame as shown in Fig. 42, so that power consumption by the terminating resistor 3103 can be reduced considerably.

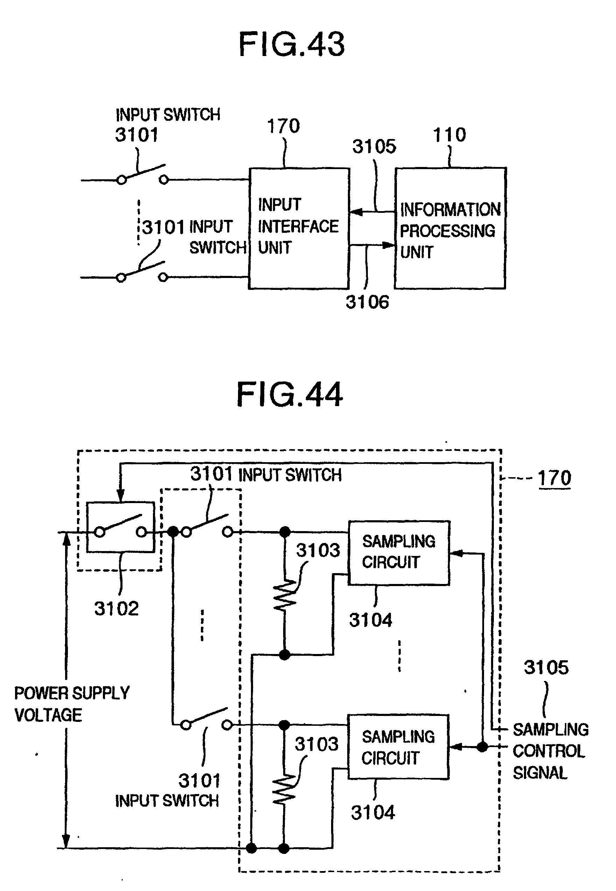

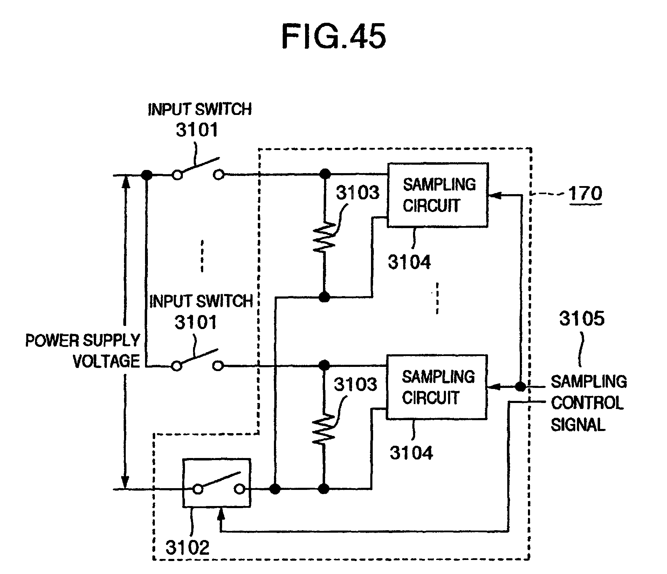

In the above structures, one input switch is used. In a practical control system, as shown in Fig. 43, a plurality of input switches 3101 are used. In this case, if the switching elements 3102 are provided as many as the number of input switches, the effects of making the control system compact and cost effective through reduction in power consumption are lowered. In this connection, as shown in Figs. 44 and 45, a single switching element 3102 is connected to a common line of the plurality of input switches 3101 to retain the effects of making the control system compact and cost effective.

Next, the user interface unit 180 shown in Fig. 1 will be described.

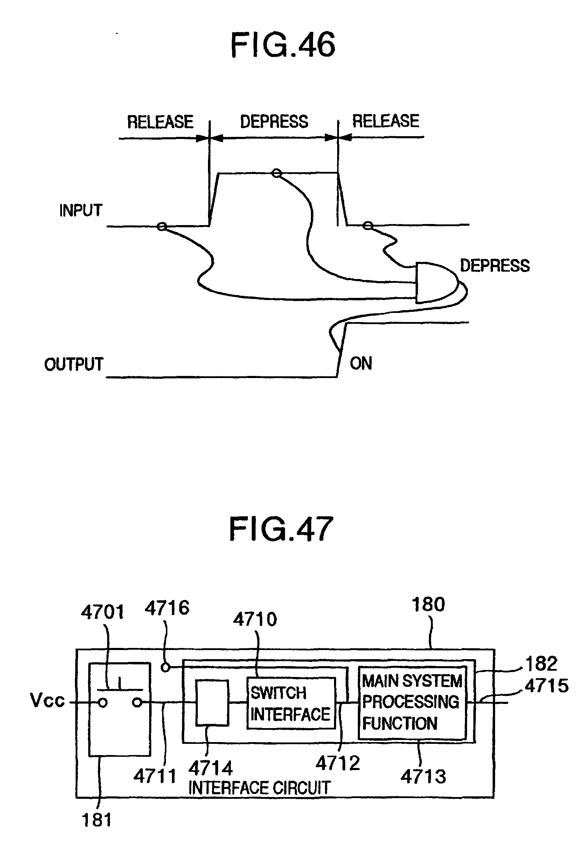

Fig. 47 shows the structure of the user interface unit. A momentary switch 4701 is of a normally open type that contacts are closed when the switch is depressed and opened when it is released. When the momentary switch 4701 is released, a Low level is applied to an input line 4711 to the switch information processing unit 182, whereas when the momentary switch 4701 is depressed, a High level is applied. Therefore, the switch information processing unit 182 can detect the status of the momentary switch 4701 from the level of the input line 4711. The switch information processing unit 182 has a switch interface circuit 4714, a switch interface function 4710, and a main system processing function 4713 which is the main object of the switch information processing unit 182. The switch information processing unit 182 delivers an output to an output line 4715. The switch interface circuit 4714 is practically realized by hardware, whereas the switch interface function 4710 and main system processing function 4713 are realized by software. The switch interface function 4710 checks the input of the input line 4711 and outputs a signal indicating whether the momentary switch 4701 is depressed or not, to an output line 4717. The main system processing function 4723 checks an output on the output line 4712 supplied from the switch interface function 4710 and performs the process which is the main object of the switch information processing unit 182.

As shown in Fig. 47, the output line 4712 of the switch interface function 4710 is connected to a display unit 4716 to turn on it by an output on the output line 4712. It is therefore possible to notify an operator of whether the switch interface function 4710 has recognized that the momentary switch 4701 was depressed.

Fig. 46 shows the fundamental structure of the switch interface function 4710.

"RELEASE" and "DEPRESS" indicate the status of the momentary switch 4701. As shown, the switch interface function 4710 recognizes that the momentary switch was depressed only when the input on the input line 4711 sequentially changes in the order of:
(1) a released status of the momentary switch,
(2) a depressed status of the momentary switch, and
(3) a released status of the momentary switch, and delivers an output to the output line 4712.

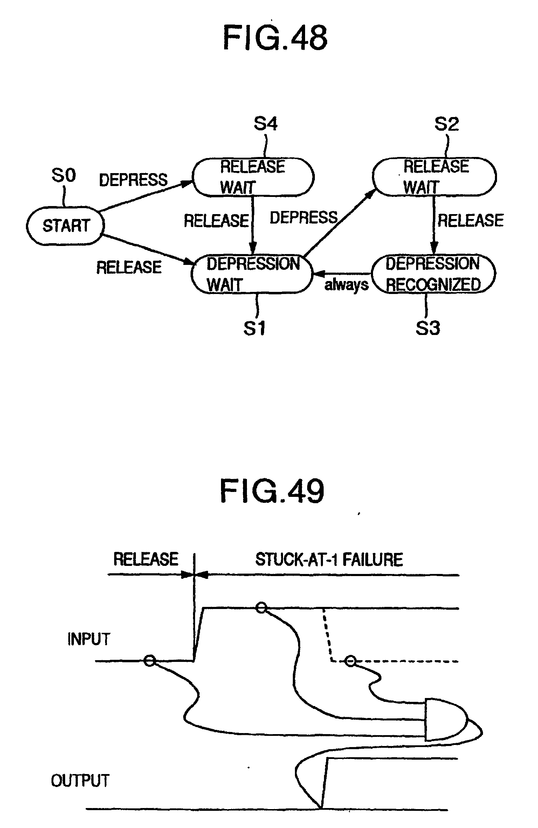

Fig. 48 shows the status transition of the switch interface function 4710 realizing the above function. Immediately after initialization upon turn-on of a power supply or the like, the switch interface function 4710 takes a start status S0. Depending upon the signal level on the input line 4711, the function 4710 takes either a depression wait status S1 or a release wait status S4. The depression wait status S1 is the origin of operation of the switch interface function 4710. If the momentary switch 4701 is in a depressed status immediately after initialization, the function 4710 takes the release wait status S4 and then takes the depression wait status S1 after the momentary switch 4701 is released. If the momentary switch 4701 is depressed while the switch interface function 4710 takes the depression wait status S1, the status transitions to the release wait status S2. Next, if the momentary switch 4701 is released during the release wait status S2, the function 4710 takes the depression recognized status S3 to turn on the output line 4712 (depression recognized) and returns to the depression wait status S1. In the above status transition of the switch interface function 4710, only when the status of the momentary switch 4701 transitions in the order of the status (1), status (2) and status (3), the switch interface function 4710 recognizes that the momentary switch 4701 was depressed.

If a stuck-at-1 failure of the switch interface circuit 4714 of the momentary switch 4701 occurs or if contacts of the momentary switch 4701 were melted and closed, the status (2) shown in Fig. 49 continues and the status transition from the status (1) to the status (2) and to the status (3) does not occur. It is not recognized therefore that the momentary switch 4701 was depressed by a failure.

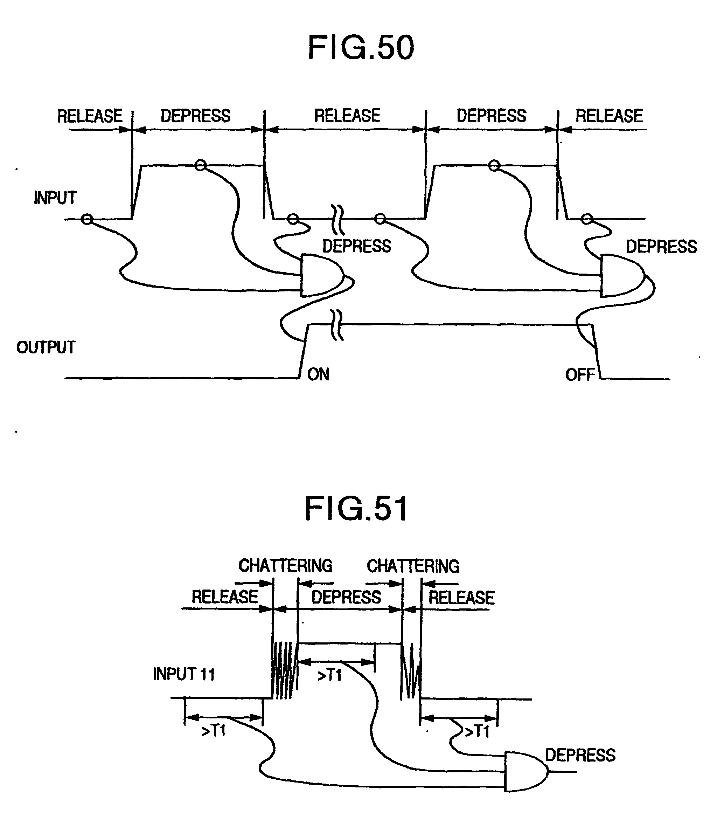

Fig. 50 shows the structure in which a toggle function is added to the switch interface function 4710. Namely, each time the status transitions occur in the order of the status (1), status (2) and status (3), the output line 4712 is turned on and off. Therefore, a toggle function can be realized which repeats turning on and off the output line 4712 each time the momentary switch 4701 is depressed.

Fig. 51 illustrates a countermeasure for eliminating chattering effects added to the switch interface function 4710. In the examples shown in Figs. 47 and 48, each time the momentary switch 4701 repeats turning on and off the output line, it is recognized because of chattering of the momentary switch 4701 that the status transitioned in the order from the status (1) to the status (2) and to the status (3). In this example, if the status (1) to status (3) continue for a predetermined time T1 or longer and if the status transitions in the order of status (1), status (2) and status (3), then the switch interface function 4710 recognizes that the momentary switch 4701 was depressed.

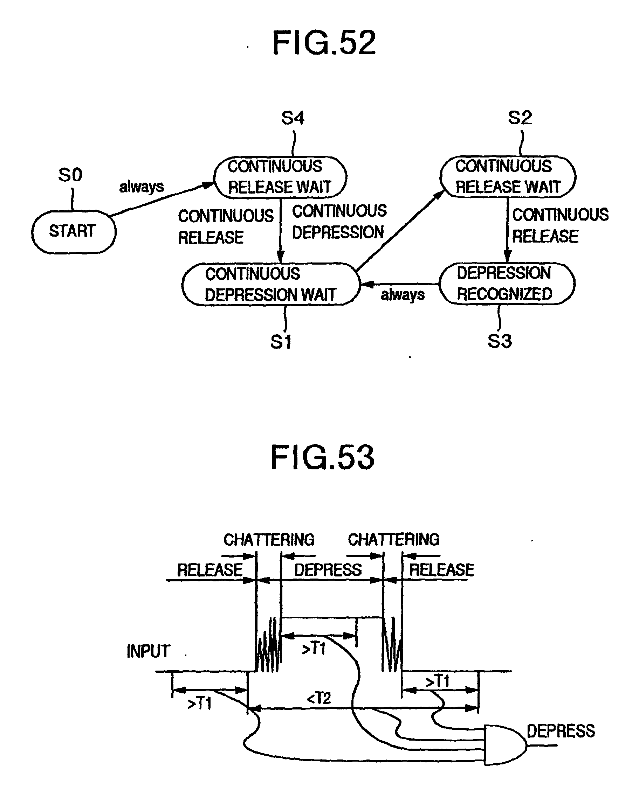

Fig. 52 shows the status transition of the switch interface function 4710 realizing the above function. Immediately after initialization upon turn-on of a power supply or the like, the switch interface function 4710 takes a start status S0 and then takes a continuous release wait status S4. After the momentary switch 4701 is released continuously for a predetermined time T1 or longer, a continuous depression wait status S1 enters. If the momentary switch 4701 is depressed continuously for the predetermined time T1 or longer while the switch interface function 4710 takes the continuous depression wait status S1, the status transitions to the continuous release wait status S2. Next, if the momentary switch 4701 is released continuously for the predetermined time T1 or longer while the switch interface function 4710 takes the continuous release wait status S2, the status transitions to a depression recognized status S3 to turn on the output line 4712 (depression recognized) and returns to the depression wait status S1. In the above status transition of the switch interface function 4710, only when the status of the momentary switch 4701 transitions in the order of the status (1), status (2) and status (3), the switch interface function 4710 recognizes that the momentary switch 4701 was depressed.

With the above structure, it is possible to prevent an erroneous recognition of a depression of the momentary switch 1701 to be otherwise caused by chattering. It is also possible to prevent an erroneous recognition of a depression of the momentary switch 1701 to be otherwise caused by inadvertent instant touch of the momentary switch 1701.

Figs. 53 to 56 show the structures in which a time-out function is added to the switch interface function 4710.

With the structure shown in Fig. 53, if the status transition from the status (1), status (2) and status (3) is not completed in a predetermined time T2, it is not recognized that the momentary switch 1701 was depressed.

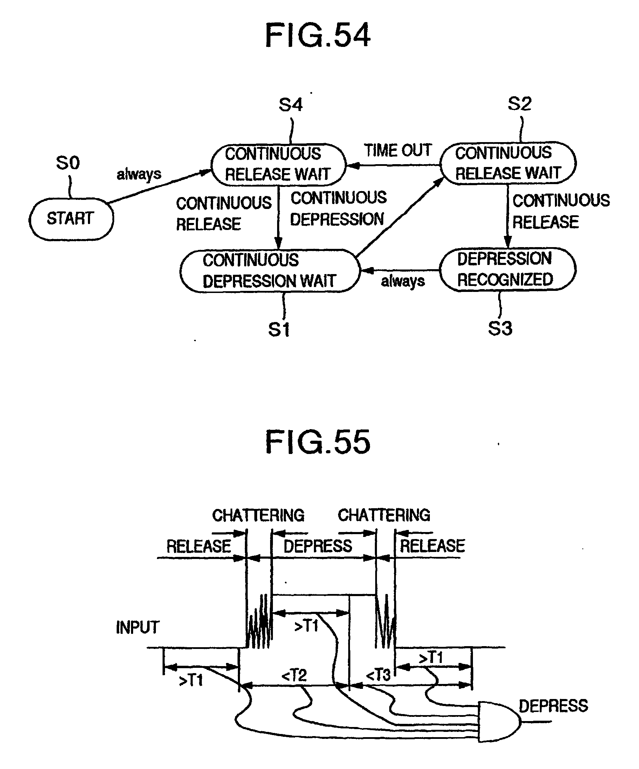

Fig. 54 shows the status transition of the switch interface function 4710 realizing the above function. This status transition is basically the same as that shown in Fig. 51. If the momentary switch 4701 is not released continuously for the predetermined time T1 or longer within the predetermined time T2 during the continuous release wait status S2, then a time-out occurs and the status returns to the continuous release wait status S4.

With the structure shown in Fig. 55, if the status transition from the status (1) to the status (2) and the status transition from the status (2) to the status (3) are not completed in predetermined times T2 and T3, it is not recognized that the momentary switch 1701 was depressed.

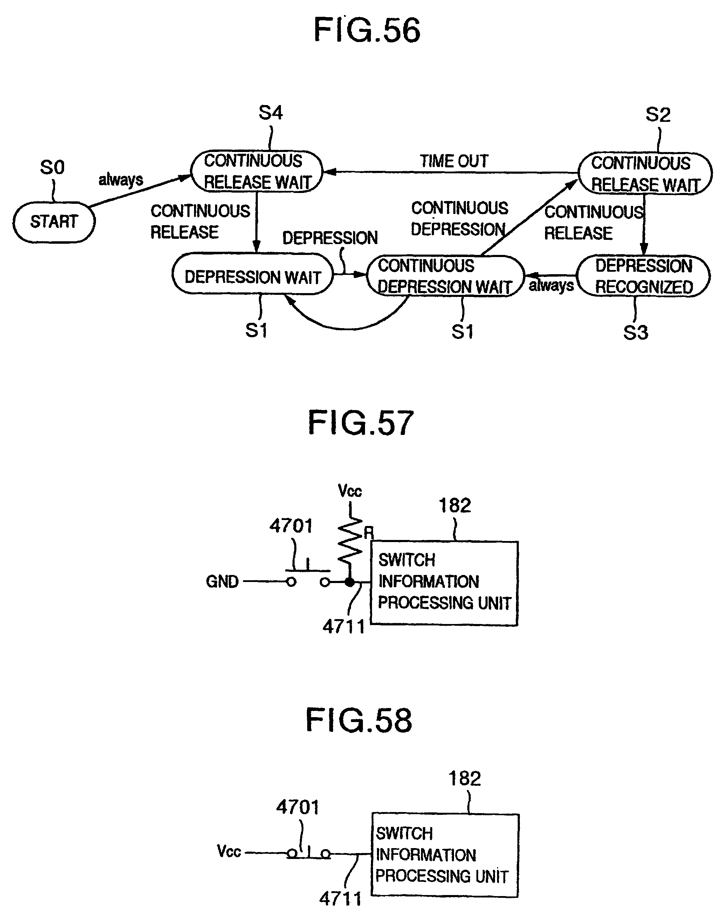

Fig. 56 shows the status transition of the switch interface function 4710 realizing the above function. This status transition is basically the same as that shown in Fig. 51. If the momentary switch 4701 is not released continuously for the predetermined time T1 or longer within the predetermined time T3 during the continuous release wait status S2, then a time-out occurs and the status returns to the continuous release wait status S4. If the momentary switch 4701 is not depressed continuously for the predetermined time T1 or longer within the predetermined time T2 during the continuous depression wait status S1, then a time-out occurs and the status returns to a continuous depression wait status S1' and then to a continuous depression wait status S1 for waiting a continuous depression during T1 or longer. Namely, measuring the continuous depression time in the continuous depression wait status S1 is cleared by time-out. If an alarm is issued at the time-out, it becomes possible to notify a failure near at the momentary switch 4701.

With the above-described structures shown in Figs. 53 to 56, it is possible to prevent the recognition of a depression of the momentary switch 4701 to be otherwise caused by a stuck-at-1 failure which recovers after continuance for a predetermined time, and it is also possible to detect the failure. A failure of continuous chattering caused by contact defects of the momentary switch 4701 can also be detected.

The nearby structure of the momentary switch 4701 such as shown in Fig. 47 has been described. The structures shown in Figs. 57 to 60 may also be used while achieving the objects similar to the above.

The momentary switch 4701 shown in Fig. 57 is of a normally open type that contacts are closed when the switch is depressed and opened when it is released. An input line 4711 to the switch information processing unit 182 is pulled up via a resistor R to a power source Vcc and grounded via the momentary switch 4701. In this example, when the momentary switch 4701 is released, a High level is applied to the input line 4711 to the switch information processing unit 182, whereas when the momentary switch 4701 is depressed, a Low level is applied.

The momentary switch 4701 shown in Fig. 58 is of a normally close type that contacts are closed when the switch is released and opened when it is depressed, contrary to that shown in Fig. 47. Similar to the circuit structure shown in Fig. 47, a signal on the input line 4711 to the switch information processing unit 182 is coupled via the momentary switch 4701 to a power source Vcc. In this example, when the momentary switch 4701 is released, a High level is applied to the input line 4711 to the switch information processing unit 182, whereas when the momentary switch 4701 is depressed, a Low level is applied.

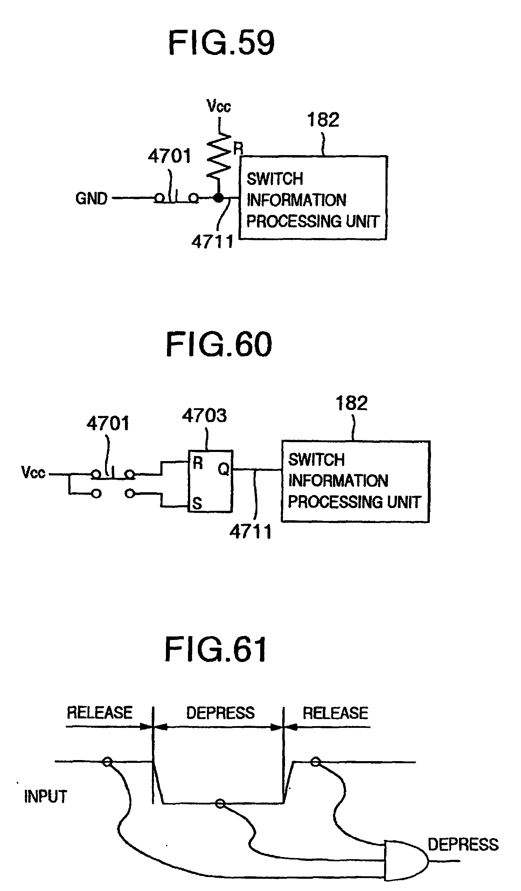

The momentary switch 4701 shown in Fig. 59 is of a normally close type that contacts are closed when the switch is released and opened when it is depressed, contrary to that shown in Fig. 47. Different from the circuit structure shown in Fig. 47, a signal on the input line 4711 to the switch information processing unit 182 is pulled up via a resistor R to a power source Vcc and grounded via the momentary switch 4701. In this example, when the momentary switch 4701 is released, a Low level is applied to the input line 4711 to the switch information processing unit 182, whereas when the momentary switch 4701 is depressed, a High level is applied.

In the momentary switch 4701 shown in Fig. 60, one of the normally close contacts which are opened when the momentary switch 4701 is depressed and closed when it is released, is connected to an S input of an RS-flip-flop 4703, and one of the normally open contacts which are opened when the momentary switch 4701 is released and closed when it is depressed, is connected to an R input of the RS-flip-flop 4703. Others of the normally close and open contacts are connected together to a power source Vcc. In this example, when the momentary switch 4701 is released, the RS-flip-flop 4703 is reset and a Low level is applied to the input line 4711 to the switch information processing unit 182, whereas when the momentary switch 4701 is depressed, the RS-flip-flop is set and a High level is applied.

Of these examples, the example shown in Fig. 59 can be applied to the structures already described. However, in the case of the examples shown in Figs. 57 and 58, polarities are reversed as shown in Fig. 61. In the case of the example shown in Fig. 60, chattering can be absorbed by the RS-flip-flop 4703 so that a countermeasure of chattering is not necessary.

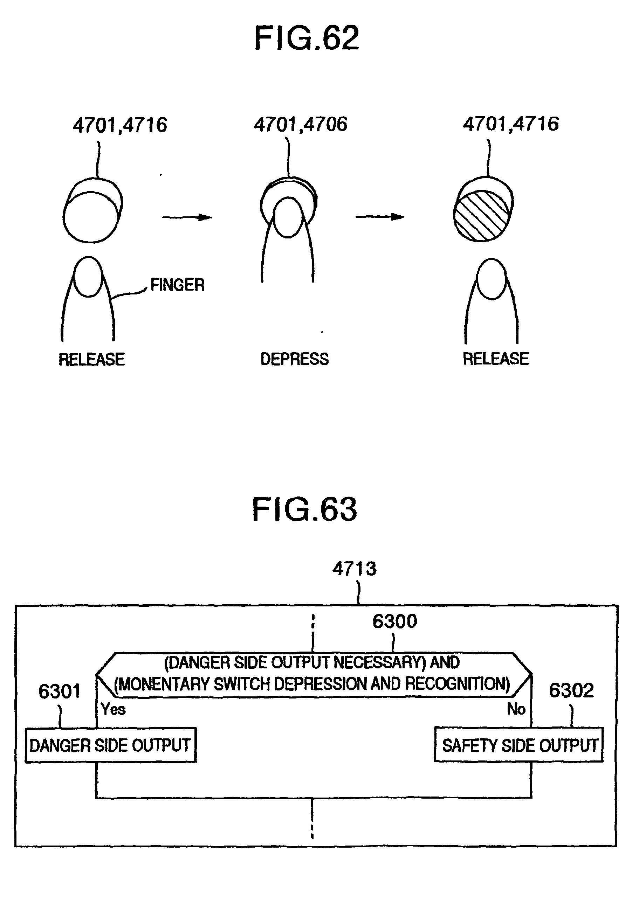

A method of using a switch according to an embodiment of the invention is illustrated in Fig. 62. In order for the switch interface function 4710 of this invention to recognize a switch depression, the release state shown at the left of Fig. 62 continues for a predetermined time T1 or longer, thereafter the momentary switch 4701 is depressed for the predetermined time T1 or longer as shown at the middle of Fig. 62, and then the momentary switch 4701 is released as shown at the right of Fig. 62. If a display unit 4716 is provided (in this case, this display unit is mounted inside of the momentary switch 4701), this display unit 4716 turns on when the switch interface function 4710 recognizes a switch depression, to thereby inform an operator of the switch depression. If the status does not continue for the predetermined time T1 or if the status does not transition within the time-out times T2 and T3, the switch interface function 4710 does not recognize a switch depression so that the display unit 4716 does not turn on. In this case, the operations illustrated in Fig. 62 are performed again.

Fig. 63 shows an embodiment of the main system processing function 4713. If it is judged that a danger side signal is required to be sent to the output line 4715 of the main system processing function 4713, a danger side output is delivered (Step 6300) if it is judged (Step 6300) that the momentary switch 4701 was depressed, or if not, a safety side output is delivered (Step 6302). The danger side output is such an output which is safe if it is output by a normal process and is dangerous if it is output by an abnormal process. The safety side output is such an output which is safe even if it is erroneously output. For example, in the field of train control, a braking output for stopping a train is the safety side output, and an accelerating output for accelerating a train is the danger side output.

The main system processing function 4713 may be provided with a braking function, defined as the safety side, of driving a brake to stop a train and a accelerating function, defined as the danger side, of accelerating the train. In this case, an output of the switch interface function 4710 of the momentary switch 4701 is supplied to the main system processing function 4713, and if it is judged that the momentary switch 4701 was depressed and the switch interface function 4710 of the momentary switch 4701 delivers an output, then the accelerating process defined as the danger side is performed, whereas if the switch interface function 4710 of the momentary switch 4701 does not deliver an output, then the braking process defined as the safety side is performed.

As above, the switch interface circuit 4714 and switch interface function 4710 of the momentary switch 4701 of this invention can be applied easily to a fail safe system.

According to the present invention, a fail safe system can be realized with a simple momentary switch interface, the danger side output being avoided by all means even upon occurrence of a failure of the momentary switch or switch interface circuit.

Lastly, fabrication of the information processing unit 110 shown in Fig. 1 on a single LSI will be described.

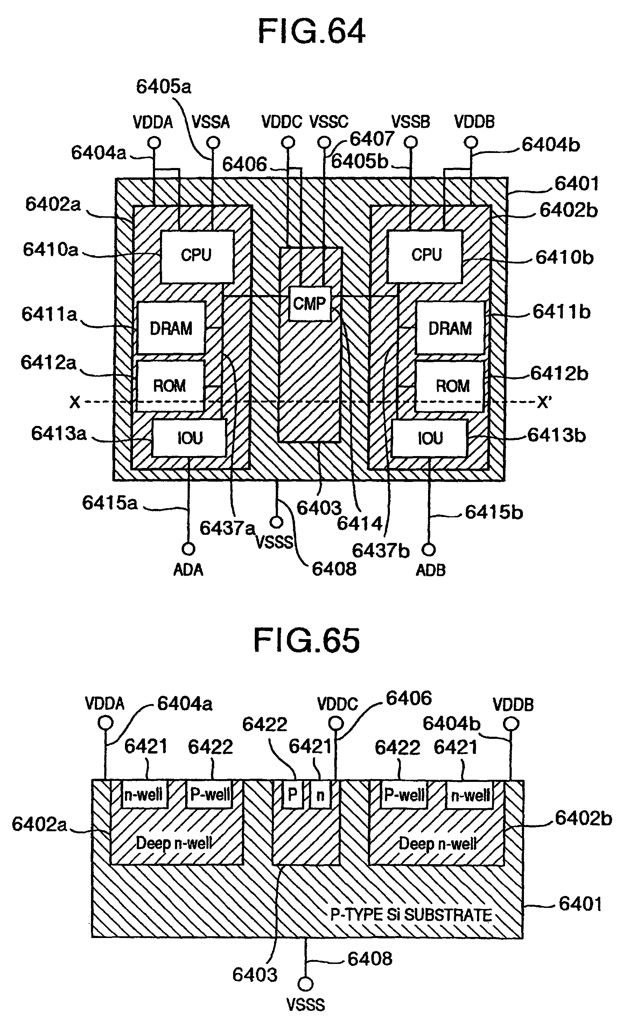

Fig. 64 is a schematic diagram showing an inner layout of a chip of the information processing unit 110 shown in Fig. 1. Reference numeral 6401 represents a p-type silicon substrate of a chip on which circuit elements such as CPUs 6410a and 6410b and memories 6411a and 6411b are integrated. Reference numerals 6402a, 6402b and 6402 represent deep n-well layers formed on the p-type silicon substrate 6401, the circuit elements such as CPUs 6410a and 6410b and memories 6411a and 6411b being integrated in these deep n-well layers. Reference numerals 6404a, 6404b and 6406, 6405a, 6405b and 6407 represent power supply lines to the deep n-well layers and integrated circuits. Reference numeral 6408 represents a supply line of a bias voltage to be applied to the p-type silicon substrate 6401. CPUs 6419a and 6410b are know microprocessor cores such as general CPUs. DRAMs 6410a and 6410b are large capacity memories which may be so-called DRAM macro cells, ferroelectric memory macro cells, or other rewritable memories. ROMs 6412a and 6412b store programs and data, and they are not necessary if DRAMs 6410a and 6410b are made of ferroelectric memories. Input/output units IOUs 6413a and 6413b are circuits for data input/output via bus signal lines 6415a and 6415b to and from the outside of the chip. Serial signal lines in addition to bus signals may be included as well known by those skilled in the art. A bus comparator circuit CMP 6414 compares data on bus signals 6437a and 6437b in the chip.

Circuit elements integrated in the deep n-well layers 6420a and 6420b are disposed and wired in mirror symmetry with respect to the deep n-well layer 6403, to thereby make the wiring length to CMP 6403 equal to facilitate timing designs. The bus signals 6437a and 6437b in the chip are wired near the deep n-well layer 6403 so that the number of intersections between signals to CMP 6403 and wiring patterns in each deep n-well layer 6402 is reduced and wiring processes are made efficient.

Fig. 65 is a cross sectional view of the chip shown in Fig. 64 taken along line X-X'. According to this invention, the deep n-well layers 6402a, 6402b and 6403 are independently formed on the p-type silicon substrate 6401 to electrically separate CPUs, memories and CMP integrated in the deep n-well layers 642a, 642b and 6403.

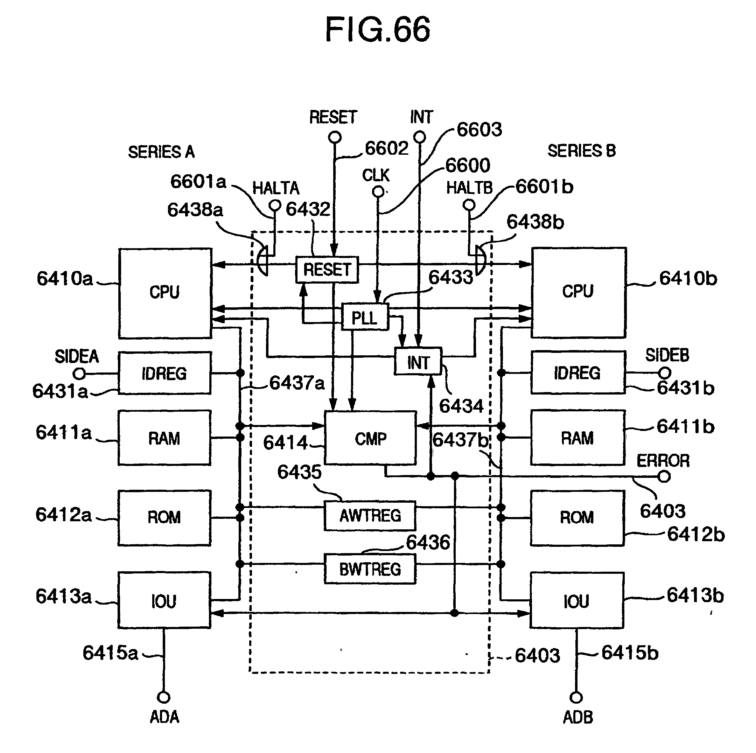

Fig. 66 is a functional block diagram of a multi-microcontroller integrated on one chip.

This block diagram is roughly divided into an A series module, a B series module and a common module. Reference numerals 6410a, 6410b, 6411a, 6411b, 6412a, 6412b, 6413a and 6413b represent CPUs, memories, ROMs and input/output units, as described earlier. The bus comparator CMP 6414 monitors data on the internal buses 6437a and 6437b, and when incoincidence is detected, an error signal 6603 is turned on. Signals to be compared by CMP 6414 may include control signals of each series in addition to so-called bus signals. IDREGs 6431a and 6431b are registers used for identifying the A or B series of CPUs by reading the contents of the registers in accordance with a program. For such identification, fixed data specific to the series may be stored in IDREG when LSI is manufactured, or data specific to the series may be supplied from external pins of IDREGs shown in Fig. 66.

RESET 6432 is a reset signal generator circuit for distributing a reset signal supplied from an external reset pin 6602 to each series and other circuits, synchronously with an internal clock of the microcontroller. PLL 6433 is a clock signal generator circuit for distributing a clock signal supplied from an external clock pin 6600 to each series and other circuits, PLL having a function of reducing clock skew in the chip by using PLL (phase locked loop) techniques, and in addition a differential function of reducing an occurrence of the concurrent error to be caused by noises, by shifting a clock of each series by a half cycle. INT 6434 is an interrupt signal generator circuit for distributing an interrupt signal supplied from an external interrupt pin 6603 or an error signal ERROR 6602 generated by the bus comparator CMP 6414 to CPUs 6419a and 6410b of each series, synchronously with the internal clock of the microcontroller.

AWTREG 6435 is a liaison register of the type that data can be written only by CPU 6410a of the A series and write data of CPU 6410b is neglected, although data can be read by both CPUs 6410a and 6410b. BWTREG 6436 is a liaison register of the type that data can be written only by CPU 6410b of the B series and write data of CPU 6410a is neglected, although data can be read by both CPUs 6410a and 6410b. Use of AWTREG 6435 and BWTREG 6436 allows data specific to each series can be supplied to both series. Reference numerals 6438a and 6438b represent logical OR elements for supplying CPUs 6410a and 6410b with halt signals of respective series supplied from external halt pins 6601a and 6601b.

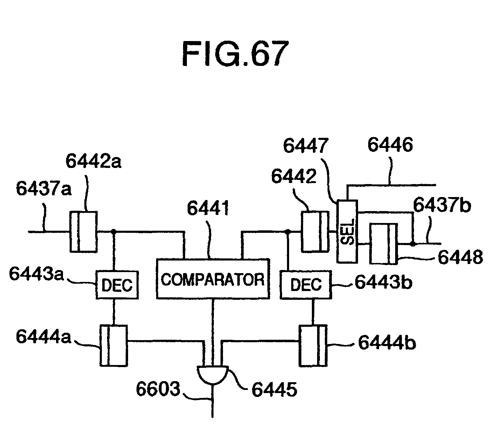

Fig. 67 shows the internal structure of CMP 6414. Registers 6442a and 6442b store temporarily data on the internal buses 6437a and 6437b. Address decoders DECs 6443a and 6443b are used for the access of data set to control registers 6444a and 6444b of CMP 6414. As data is set to the control registers, bus comparison is made valid. However, any one of the control registers is cleared, the bus comparison becomes invalid and even if incoincidence is detected, the error signal 6603 does not turn on. Set/reset of the control registers may be performed explicitly by designating an address of the register and may be automatically performed when a specific address (e.g., a liaison register address) is output to the internal bus. The control registers 6444a and 6444b are cleared when a reset signal is supplied from RESET 6432 or when a comparator 6441 detects incoincidence. Reference numeral 6445 represents a logical AND element. A selector SEL 6447 selects a register 6448 side through designation by a signal line 6446 if PLL 6433 performs the differential function, and selects the other side if PLL 6433 does not perform the differential function.

Next, the main operations of the multi-microcontroller shown in Fig. 66 will be described.

### (1) Setup Operation

When a reset signal is supplied from an external circuit to RESET 6602, CPU and all other circuits are initialized. Since the reset signal is generally an asynchronous signal, CPUs of both series may be reset at different timings. To avoid this, the reset signal is synchronized with the internal clock by RESET 6432 and distributed to the inside of the chip. Upon reception of the reset signal, the bus comparison by CMP 6414 becomes invalid. Under the conditions of no bus comparison, CPUs of both series clear the memories and set initial values of unrepresented registers and the like. After initialization is completed normally, the bus comparison is made valid to enter a duplicated state.

### (2) Normal Operation

Generally, both the A and B series store the same programs in the chip, and these programs are executed at perfectly the same timings. Data transfers via the internal buses 6437a and 6437b are compared by the bus comparator 6414 in the unit of bus cycle. If there is no incoincidence, the ERROR signal 6603 does not turn on. In order not to generate incoincidence of an input/output operation relative to unrepresented external circuits, it is necessary to provide external circuits which input or output perfectly the same data at perfectly the same timings.

Since the interrupt signal 6603 is generally an asynchronous signal, CPUs of both series may be reset at different timings. To avoid this, the interrupt signal is synchronized with the internal clock by INT 6434 and supplied to CPUs.

### (3) Operation at Bus Comparison Error

If data on the internal buses 6437a and 6437b becomes incoincident by some reasons such as element deterioration and DRAM operation noises, CMP 6414 turns on the ERROR signal 6603. When the ERROR signal 6603 turns on, an error interrupt signal is generated by INT 6434 and supplied to CPUs 6410a and 6410b. CPUs then start a predetermined error process. Upon generation of the ERROR signal 6603, IOUs 6415a and 6415b stop their output operations and notify the external circuits of an error.

### (4) Single Series Operation Mode

If duplication is not necessary or programs are to be developed, a single series operation is desired. An optional series can be set to a halt state and a single series operation can be realized, by turning on a corresponding one of HALTS 6601a and 6601b from the external circuit.

### (5) Method of Improving Resistance to Noises

Correlation of noises entering from power source lines can be reduced by using highly independent power sources for the deep n-well layer of each series and the deep n-well layer of the bus comparator CMP 6414. In this manner, concurrent errors can be reduced so that errors not detected by CMP 6414 can be reduced and the reliability of the controller can be improved.

Next, another example of the multi-microcontroller will be described with reference to drawings.

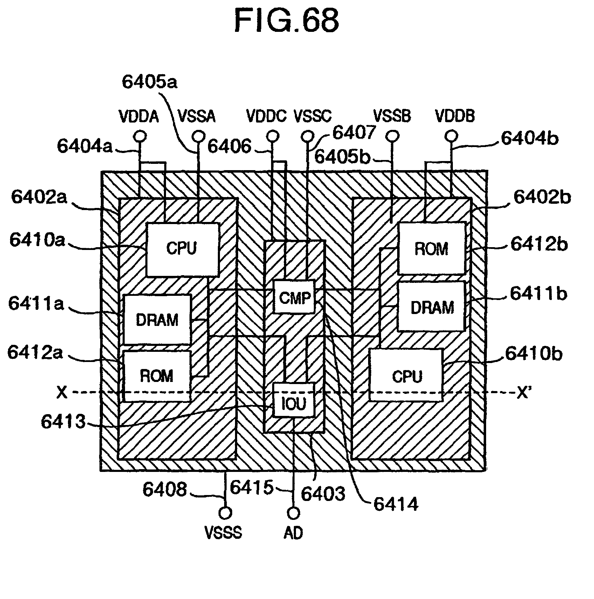

Fig. 68 is a schematic diagram showing an inner layout of a chip of another multi-microcontroller embodying the present invention. Each constituent element and the X-X' cross section of the chip are the same as the first example described previously. In this second example, an input/output unit IOU 5413 is integrated on the common deep n-well layer to suppress an increase of input/output pins. Circuits integrated on the deep n-well layers 6402a and 6402b are disposed and wired in point symmetry relative to the center of the deep n-well layer 6403, so that spatial correlation can be reduced. In this manner, concurrent errors can be reduced so that errors not detected by CMP 6414 can be reduced and the reliability of the controller can be improved further. The bus signal lines 6437a and 6437b in the chip are wired near at the deep n-well layer 6403 to shift the lead points of the bus signals lines to CMP 6414, so that the number of intersections between signals to CMP 6403 and connection lines in each deep n-well layer 6402a, 6402b can be reduced and a wiring process can be made efficient.

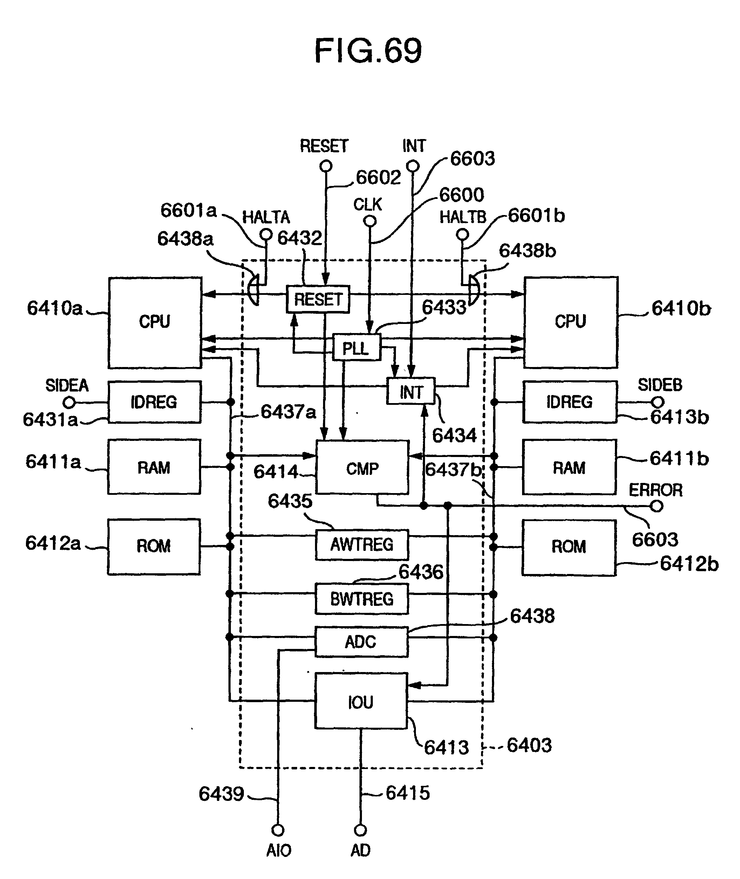

Fig. 69 is a functional block diagram of the multi-microcontroller integrated on a single chip.

Each constituent element is the same as the first example. The input/output unit IOU 6413 for data transfer to and from an external circuit selects one of the outputs from the A and B series for data write by CPUs, or a logical sum or product of the outputs is supplied to the external bus 6415. For data read by CPUs, data on the external bus 6415 is supplied at the same time to the internal buses 6437a and 6437b. ADC 6434 is an analog/digital converter. An analog/digital converter generally has quantization errors. If analog/digital converters are integrated separately, the bus comparator CMP 6414 may erroneously detect an error. Therefore, the analog/digital converter is integrated on the common deep n-well layer so that the same data can be supplied to the internal bus 6437.

The operation of the second example is the same as the first example.

## Claims

1. A data output circuit (126, 136; 21 ... 2n) included in each of a plurality of modules (120, 130; 11 ... 1n) for synchronously executing the same instruction and delivering outputs to a final output circuit (150; 4), wherein said data output circuit comprises:
first means (OUTall) for delivering the same output common for all said modules (11 ... 1n) ; and
second means (OUTi) for delivering an output specific only to a particular module (1i),
**characterised in that** said first (OUTall) and second means (OUTi) include registers assigned to different addresses.

2. An information processing system (100) having a plurality of modules (120, 130; 11 ... 1n) for synchronously executing the same instruction and a final output circuit (150; 4) for receiving outputs from the modules and delivering an output, wherein each said module comprises:
first means (OUTall) for delivering the same output common for all said modules (11 ... 1n); and
second means (OUTi) for delivering an output specific only to a particular module (1i),
**characterised in that** said first (OUTall) and second means (OUTi) include registers assigned to different addresses.

3. The system of claim 2, wherein internal signals of said plurality of modules (120, 130; 11 ... 1n) are compared to detect an error.

## Patentansprüche

1. In jedem von mehreren Modulen (120, 130; 11 ... 1n) enthaltene Datenausgabeschaltung (126, 136; 21 ... 2n) zum synchronen Ausführen der gleichen Anweisung und Liefern von Ausgabesignalen an eine Endausgabeschaltung (150; 4), wobei die Datenausgabeschaltung umfaßt:
eine erste Einrichtung (OUTall) zum Liefern des gleichen Ausgabesignals gemeinsam für alle Module (11 ... 1n); und
eine zweite Einrichtung (OUTi) zum Liefern eines Ausgabesignals spezifisch für nur ein bestimmtes Modul (1i),
**dadurch gekennzeichnet, daß** die erste (OUTall) und die zweite Einrichtung (OUTi) verschiedenen Adressen zugewiesene Register aufweisen.

2. Informationsverarbeitungssystem (100) mit mehreren Modulen (120, 130; 11 ... 1n) zum synchronen Ausführen der gleichen Anweisung und einer Endausgabeschaltung (150; 4) zum Empfangen von Ausgabesignalen von den Modulen und zum Liefern eines Ausgabesignals, wobei jedes Modul aufweist:
eine erste Einrichtung (OUTall) zum Liefern des gleichen Ausgabesignals gemeinsam für alle Module (11 ... 1n); und
eine zweite Einrichtung (OUTi) zum Liefern eines Ausgabesignals spezifisch für nur ein bestimmtes Modul (1i),
**dadurch gekennzeichnet, daß** die erste (OUTall) und die zweite Einrichtung (OUTi) verschiedenen Adressen zugewiesene Register aufweisen.

3. System nach Anspruch 2, wobei interne Signale der Vielzahl von Modulen (120, 130; 11 ... 1n) zum Auffinden eines Fehlers verglichen werden.

## Revendications

1. Circuit de sortie de données (126, 136 ; 21 ... 2n) inclus dans chacun d'une pluralité de modules (120, 130 ; 11 ... 1n) pour exécuter d'une manière synchrone la même instruction et délivrer des sorties à un circuit de sortie finale (150 ; 4), ledit circuit de sortie de données comportant :
des premiers moyens (OUTall) pour délivrer la même sortie commune pour tous lesdits modules (11 ... 1n), et
des seconds moyens (OUTi) pour délivrer une sortie spécifique uniquement à un module particulier (1i),
**caractérisé en ce que** lesdits premiers moyens (OUTall) et seconds moyens (OUTi) incluent des registres affectés à des adresses différentes.

2. Système de traitement d'informations (100) ayant une pluralité de modules (120, 130 ; 11 ... 1n) pour exécuter d'une manière synchrone la même instruction et un circuit de sortie finale (150 ; 4) pour recevoir des sorties provenant des modules et délivrer une sortie, dans lequel chaque module comporte :
des premiers moyens (OUTall) pour délivrer la même sortie commune pour tous lesdits modules (11 ... 1n), et
des seconds moyens (OUTi) pour délivrer une sortie spécifique uniquement à un module particulier (1i),
**caractérisé en ce que** lesdits premiers moyens (OUTall) et seconds moyens (OUTi) incluent des registres affectés à des adresses différentes.

3. Système selon la revendication 2, dans lequel des signaux internes de ladite pluralité de modules (120, 130 ; 11 ... 1n) sont comparés pour détecter une erreur.
